# EUROPEAN PATENT APPLICATION

(11) **EP 4 636 992 A1**
(43) Date of publication of application: **22.10.2025**
(21) Application number: 25170837.6
(22) Date of filing: 15.04.2025
(51) Int. Cl.: H02K 1/16, H02K 3/24, H02K 3/48, H02K 3/34, H02K 9/19

(54) **FLAT WIRE MOTOR WITH DIRECTLY COOLED FLAT WIRE WINDING, POWERTRAIN, AND ELECTRIC VEHICLE**

(30) Priority: 17.04.2024 CN 202410465566
(71) Applicant: Huawei Digital Power Technologies Co., Ltd., Shenzhen, Guangdong 518043 (CN)
(72) Inventor: CONG, Qi, Shenzhen, 518043 (CN); JIANG, Kui, Shenzhen, 518043 (CN); XIANG, Yu, Shenzhen, 518043 (CN)
(74) Representative: Gill Jennings & Every LLP

(57) **Abstract**

This application provides a flat wire motor with a directly cooled flat wire winding, a powertrain, and an electric vehicle. A motor stator of the flat wire motor includes a plurality of winding grooves, and the plurality of winding grooves are spaced apart. The flat wire winding includes a plurality of connected flat wires, and each winding groove is configured to accommodate a plurality of flat wires. The plurality of flat wires include a first flat wire and a second flat wire, and the first flat wire and the second flat wire are arranged on two sides of other flat wires in the plurality of flat wires in a radial direction of the motor. One radial groove wall of the winding groove and the first flat wire are arranged adjacently in the radial direction of the motor, and a gap between the one radial groove wall and the first flat wire is used as a first cooling groove. The first cooling groove is configured to transmit coolant to directly cool the first flat wire, and in a circumferential direction of the motor, an inner groove width of the first cooling groove is less than a width of the first flat wire. In this application, the first cooling groove is formed by using the gap between the one radial side wall of the winding groove and the first flat wire, and the first cooling groove can cool and fasten the first flat wire. This helps improve cooling efficiency of the flat wire winding.

## Description

### TECHNICAL FIELD

This application relates to the field of electric vehicle technologies, and in particular, to a flat wire motor with a directly cooled flat wire winding, a powertrain, and an electric vehicle.

### BACKGROUND

In the new energy vehicle industry, as electric vehicles continuously develop toward high power density, heat generated by a flat wire motor in a working process also gradually increases. A resistance loss of the flat wire winding is one of main heat sources of the flat wire motor. To control a temperature rise of the flat wire winding, the flat wire winding needs to be cooled to dissipate heat, to prevent an excessively high temperature from affecting efficiency of the motor. However, cooling efficiency of a current heat dissipation solution for the flat wire winding is low. Consequently, a heat loss of the motor is excessively high, affecting normal driving of the electric vehicles.

### SUMMARY

Embodiments of this application provide a flat wire motor with a directly cooled flat wire winding, a powertrain, and an electric vehicle.

According to a first aspect, an embodiment of this application provides a flat wire motor with a directly cooled flat wire winding. A motor stator of the flat wire motor includes a plurality of winding grooves, the plurality of winding grooves are spaced apart in a circumferential direction of the motor stator, each winding groove is configured to accommodate a plurality of flat wires, the plurality of flat wires in the winding groove include a first flat wire and a second flat wire, and the first flat wire and the second flat wire in the winding groove are respectively arranged on two sides of other flat wires in the plurality of flat wires in a radial direction of the motor stator. One radial groove wall of the winding groove and the first flat wire are arranged adjacently in the radial direction of the motor stator, and a gap between the one radial groove wall of the winding groove and the first flat wire is used as a first cooling groove. The first cooling groove is configured to transmit coolant to directly cool the first flat wire, and in the circumferential direction of the motor stator, an inner groove width of the first cooling groove is less than a width of the first flat wire.

In this embodiment of this application, when the flat wire motor is in a working state, currents are centrally distributed on outer circumferential surfaces of the plurality of flat wires in each winding groove due to skin effect. This is equivalent to reducing effective electrification areas of the plurality of flat wires, increasing equivalent resistance of the plurality of flat wires, and increasing a resistance loss of the flat wire winding. As a result, heat of the flat wire winding continuously increases.

In this embodiment of this application, the gap between the first flat wire and the one radial groove wall in the same winding groove is used to form the first cooling groove, and the first cooling groove transmits the coolant to directly cool the outermost first flat wire in the flat wire winding, so that heat generated by the first flat wire can be directly taken away by the coolant, and a temperature of the flat wire winding can be effectively reduced. In an embodiment, the coolant is any one of glycol cooling oil, synthetic oil, and mineral oil.

The flat wire is a wire in a flat shape. To be specific, a surface area of the single flat wire in the radial direction of the motor stator is greater than a surface area of the single flat wire in the circumferential direction of the motor stator. The first cooling groove in this embodiment of this application is located on a side of the first flat wire in the radial direction of the motor stator, so that the coolant in the first cooling groove can dissipate heat for a radial surface of the first flat wire in the radial direction of the motor stator. Compared with a manner of dissipating heat for a circumferential surface of the first flat wire in the circumferential direction of the motor stator, this embodiment of this application helps increase an effective contact area between the coolant and the first flat wire, and improves cooling efficiency.

Because the first cooling groove is located on the side of the first flat wire in the radial direction of the motor stator, and the inner groove width of the first cooling groove is less than the width of the first flat wire, the first flat wire does not have a risk of falling into the first cooling groove. This is equivalent to that the first cooling groove can not only directly cool the radial surface of the first flat wire to increase a cooling area, but also fasten the first flat wire in the radial direction of the motor stator, so that the first flat wire is stably arranged on the side of the other flat wires in the radial direction of the motor stator, thereby improving electromagnetic performance of the flat wire winding. If the inner groove width of the first cooling groove is less than the width of the first flat wire, the first cooling groove is used to fasten the first flat wire, to prevent the first flat wire from falling into the first cooling groove and affecting cooling effect and an electromagnetic energy conversion process of the flat wire winding.

In addition, the second flat wire and the other flat wires in the plurality of flat wires can also indirectly exchange heat with the coolant through the first flat wire. This helps reduce overall thermal resistance of the flat wire winding, and improves cooling efficiency. The coolant directly cools the first flat wire, so that the flat wire winding works at a proper temperature. This helps prolong a service life of the flat wire winding, improves safety performance, reduces a heat loss of the flat wire winding, and increases power of the flat wire motor.

In this embodiment of this application, the gap between the one radial groove wall of the winding groove and the first flat wire is used to form the first cooling groove, and the inner groove width of the first cooling groove is less than the width of the first flat wire, so that the first cooling groove can directly cool and fasten the radial surface of the first flat wire. This helps improve cooling effect of the coolant on the first flat wire, reduces a heat loss of the motor, avoids radial displacement of the first flat wire in the winding groove, and ensures normal driving of an electric vehicle.

In an embodiment, the plurality of flat wires in the winding groove are arranged in the radial direction of the motor stator, and the first cooling groove is configured to transmit the coolant to directly cool the plurality of flat wires. In the circumferential direction of the motor stator, the inner groove width of the first cooling groove is less than a width of each flat wire in the winding groove, and an inner groove width of the winding groove is greater than the width of each flat wire in the winding groove.

In this embodiment of this application, in addition to directly cooling the first flat wire, the first cooling groove can be in direct contact with the other flat wires in the plurality of flat wires. It may be understood that, in the circumferential direction of the motor stator, it is inevitable that there is a crack between one circumferential groove wall of the winding groove and the plurality of flat wires. In other words, the inner groove width of the winding groove is greater than the width of each flat wire in the winding groove, and the crack can be used for the coolant to flow in the radial direction of the motor stator. When the first cooling groove communicates with the crack, the coolant in the first cooling groove can directly exchange heat with the plurality of flat wires in the winding groove. This greatly increases a contact area between the coolant and the flat wire winding, thereby improving heat dissipation effect.

In this embodiment of this application, in the circumferential direction of the motor stator, the inner groove width of the first cooling groove is less than the width of each flat wire in the winding groove, so that each flat wire in the winding groove does not fall into the cooling groove, thereby ensuring that the coolant can stably flow into the cooling groove.

In an embodiment, the inner groove width of the winding groove is equal to the width of each flat wire in the winding groove. This embodiment of this application helps improve a groove fullness rate of the winding groove, and enhances electromagnetic performance of the motor stator.

In an embodiment, in the radial direction of the motor stator, a distance between the first cooling groove and an outer circumferential surface of the motor stator is less than a distance between each flat wire in the winding groove and the outer circumferential surface of the motor stator, and the inner groove depth of the first cooling groove is less than or equal to a thickness of the first flat wire.

In this embodiment of this application, in the radial direction of the motor stator, the first cooling groove is closer to the outer circumferential surface of the motor stator in the radial direction of the motor stator than each flat wire in the winding groove. This facilitates introduction of the coolant from the outer circumferential surface of the motor stator into the first cooling groove.

In this embodiment of this application, the first cooling groove is formed in each winding groove, and the inner groove depth of the first cooling groove is less than or equal to the thickness of the first flat wire. This helps properly allocate flow rates of coolant in first cooling grooves in different winding grooves, so that the plurality of flat wires in each winding groove can be in contact with the coolant.

In an embodiment, the motor stator includes at least one radial flow path, and the radial flow path is configured to connect the first cooling groove to the outer circumferential surface of the motor stator in the radial direction of the motor stator.

In this embodiment of this application, in the radial direction of the motor stator, the outer circumferential surface of the motor stator, the radial flow path, and the first cooling groove are sequentially arranged. The radial flow path is configured to guide the coolant from the outer circumferential surface of the motor stator to the first cooling groove, and the first cooling groove is closer to the outer circumferential surface of the motor stator than each flat wire in the winding groove. This helps shorten a flow path of the coolant flowing into the first cooling groove, reduces a loss of the coolant on a transmission path, and improves utilization and cooling effect of the coolant.

In an embodiment, first cooling grooves of the plurality of winding grooves are spaced apart in the circumferential direction of the motor stator, at least one of the first cooling grooves includes a protrusion, the protrusion is configured to separate the first cooling groove, and in the radial direction of the motor stator, a length of the protrusion is less than or equal to a length of the first cooling groove.

In this embodiment of this application, a protrusion direction of the protrusion is parallel to the radial direction of the motor stator, and the protrusion is configured to separate the first cooling groove into two first cooling sub-grooves. The protrusion has a function of guiding flow of the coolant, and can further buffer impact force of the coolant in a specific direction, to improve heat dissipation effect. When a radial length of the protrusion is less than a radial length of the first cooling groove, the two first cooling sub-grooves located on two sides of the protrusion communicate with each other, so that the protrusion can further have a flow disturbing function, to enhance turbulence of the coolant. When the radial length of the protrusion is equal to the radial length of the first cooling groove, the protrusion can fasten the first flat wire, to avoid a position offset of the first flat wire in the radial direction of the motor stator.

In an embodiment, in the circumferential direction of the motor stator, a width of the protrusion is less than half the width of the first flat wire.

In this embodiment of this application, the protrusion can be prevented from occupying excessive space in the first cooling groove in the circumferential direction of the motor stator, to ensure that the first cooling groove can accommodate sufficient coolant, to dissipate heat for the flat wire winding.

In an embodiment, one circumferential groove wall of the winding groove and the plurality of flat wires in the winding groove are arranged adjacently in the circumferential direction of the motor stator, a gap between the one circumferential groove wall of the winding groove and at least one of the other flat wires is used as a second cooling groove, and the second cooling groove is configured to transmit the coolant to directly cool the at least one flat wire. An inner groove depth of the second cooling groove in the circumferential direction of the motor stator is less than the inner groove depth of the first cooling groove in the radial direction of the motor stator. In the radial direction of the motor stator, an inner groove width of the second cooling groove is less than a sum of thicknesses of the at least one flat wire.

In this embodiment of this application, the one circumferential groove wall of the winding groove is an inner groove wall of the winding groove in the circumferential direction of the motor stator. The gap between at least one of the other flat wires in the winding groove and the one circumferential groove wall of the winding groove is used to form the second cooling groove. The coolant in the second cooling groove can be in direct contact with a surface that is of at least one flat wire and that faces the winding groove in the circumferential direction of the motor stator, to directly cool at least one of the other flat wires. In this embodiment of this application, in the radial direction of the motor stator, the inner groove width of the second cooling groove is less than the sum of thicknesses of the at least one flat wire, so that cooling efficiency of the second cooling groove can be balanced, and displacement of the plurality of flat wires in the winding groove can be avoided.

In this embodiment of this application, the inner groove depth of the first cooling groove in the radial direction of the motor stator is greater than the inner groove depth of the second cooling groove in the circumferential direction of the motor stator, so that the coolant in the winding groove is mainly concentrated in the first cooling groove. In addition, the first cooling groove is located on the side of the plurality of flat wires in the radial direction of the motor stator, so that the coolant can exchange heat on the radial surface of the first flat wire, to properly allocate flow rates of the coolant in the first cooling groove and the second cooling groove. This helps increase a contact area between the coolant and the plurality of flat wires, thereby enhancing cooling effect.

In an embodiment, the other radial groove wall of the winding groove and the second flat wire are arranged adjacently and spaced apart in the radial direction of the motor stator, a gap between the other radial groove wall of the winding groove and the second flat wire is used as a third cooling groove, and the third cooling groove is configured to transmit the coolant to directly cool the second flat wire. In the circumferential direction of the motor stator, an inner groove width of the third cooling groove is less than a width of the second flat wire. In the radial direction of the motor stator, an inner groove depth of the third cooling groove is less than the inner groove depth of the first cooling groove.

In this embodiment of this application, the plurality of flat wires in the winding groove are arranged between the one radial groove wall and the other radial groove wall in the radial direction of the motor stator. When the coolant flows into the third cooling groove, heat generated by the second flat wire can be directly taken away by the coolant. The second flat wire is a wire in a flat shape. To be specific, an area of a radial surface of the second flat wire is greater than an area of a circumferential surface of the second flat wire. Therefore, that the third cooling groove is located on a side of the second flat wire in the radial direction of the motor stator helps increase a contact area between the coolant in the third cooling groove and the second flat wire.

In this embodiment of this application, in the circumferential direction of the motor stator, the inner groove width of the third cooling groove is less than the width of the second flat wire, so that inner groove space of the third cooling groove is not occupied by the second flat wire. This ensures that the coolant can be stably transmitted in the third cooling groove, and can further avoid displacement, in the winding groove, of the second flat wire relative to the third cooling groove in the radial direction of the motor stator.

In this embodiment of this application, in the radial direction of the motor stator, the inner groove depth of the third cooling groove is less than the inner groove depth of the first cooling groove, so that a flow rate of the coolant in the first cooling groove is greater than that of the third cooling groove. In the radial direction of the motor stator, the distance between the first cooling groove and the outer circumferential surface of the motor stator is less than a distance between the third cooling groove and the outer circumferential surface of the motor stator, and the inner groove depth of the first cooling groove is greater than that of the third cooling groove, so that a large amount of coolant can first flow into the first cooling groove, thereby reducing a loss of the coolant on a transmission path.

In an embodiment, in the radial direction of the motor stator, an inner groove depth of the third cooling groove is greater than a thickness of the second flat wire. This embodiment of this application helps improve a flow rate of the coolant in the third cooling groove, and enhances heat dissipation effect of the coolant in the third cooling groove on the second flat wire.

In an embodiment, the one radial groove wall of the winding groove includes one radial groove, and the one radial groove is concave in a direction that is away from the other radial groove wall and that is in the radial direction of the motor stator.

In this embodiment of this application, the one radial groove on the one radial groove wall is configured to enclose the first cooling groove together with the first flat wire, and a part of a surface of the first flat wire in the radial direction of the motor stator can be directly cooled by coolant in the one radial groove. The first cooling groove is formed by an inner groove wall of the winding groove, and the winding groove is formed on the motor stator. There, this helps improve structural strength of the first cooling groove.

In an embodiment, the other radial groove wall of the winding groove includes one radial groove, and the one radial groove is concave in a direction that is away from the one radial groove wall and that is in the radial direction of the motor stator.

In this embodiment of this application, the one radial groove on the other radial groove wall is configured to enclose the third cooling groove together with the second flat wire, a groove opening of the one radial groove on the other radial groove wall faces the second flat wire, and a part of a surface of the second flat wire in the radial direction of the motor stator can be directly cooled by coolant in the one radial groove on the other radial groove wall. The third cooling groove is formed by an inner groove wall of the winding groove, and the winding groove is formed on the motor stator. This helps improve structural strength of the third cooling groove.

In an embodiment, in the circumferential direction of the motor stator, an inner groove width of the one radial groove on the one radial groove wall and an inner groove width of the one radial groove on the other radial groove wall are both less than the width of the first flat wire. In this embodiment of this application, the inner groove width of the one radial groove corresponds to the inner groove width of the first cooling groove, so that the one radial groove can be used to fasten the first flat wire, prevent the first flat wire from falling into the one radial groove, and ensure that the coolant in the first cooling groove stably dissipates heat for the first flat wire.

In an embodiment, in the circumferential direction of the motor stator, an inner groove width of the one radial groove on the one radial groove wall and an inner groove width of the one radial groove on the other radial groove wall are both less than the width of the second flat wire. In this embodiment of this application, the inner groove width of the one radial groove corresponds to the inner groove width of the third cooling groove, so that the one radial groove can be used to fasten the second flat wire, prevent the second flat wire from falling into the one radial groove, and ensure that the coolant in the third cooling groove stably dissipates heat for the second flat wire.

In an embodiment, in the radial direction of the motor stator, an inner groove depth of the one radial groove on the one radial groove wall and an inner groove depth of the one radial groove on the other radial groove wall are both less than the thickness of the first flat wire. In this embodiment of this application, the inner groove depth of the one radial groove on the one radial groove wall and the inner groove depth of the one radial groove on the other radial groove wall respectively correspond to the inner groove depth of the first cooling groove and the inner groove depth of the third cooling groove. The inner groove depth of the one radial groove on the one radial groove wall and the inner groove depth of the one radial groove on the other radial groove wall are smaller than the thickness of the first flat wire. This helps properly allocate flow rates of coolant in different first cooling grooves and different third cooling grooves, and ensures that the coolant can cool flat wires in each winding groove.

In an embodiment, in the radial direction of the motor stator, an inner groove depth of the one radial groove on the one radial groove wall and an inner groove depth of the one radial groove on the other radial groove wall are both less than the thickness of the second flat wire. This embodiment of this application helps properly allocate flow rates of coolant in different first cooling grooves and different third cooling grooves, and ensures that the coolant can cool the flat wires in each winding groove.

In an embodiment, in the radial direction of the motor stator, a cross-sectional shape of the one radial groove on the one radial groove wall is different from a cross-sectional shape of the one radial groove on the other radial groove wall, and an area of the cross-sectional shape of the one radial groove on the one radial groove wall is greater than or equal to an area of the cross-sectional shape of the one radial groove on the other radial groove wall.

In this embodiment of this application, in the radial direction of the motor stator, the cross-sectional shape of the one radial groove on the one radial groove wall is different from the cross-sectional shape of the one radial groove on the other radial groove wall, so that processing of the one radial groove wall and the other radial groove wall of the winding groove is more flexible. This helps meet different requirements generated by different positions, in the winding groove, of the one radial groove on the one radial groove wall and the one radial groove on the other radial groove wall.

In an embodiment, at least one circumferential groove wall of the winding groove includes one circumferential groove, and the one circumferential groove is concave in a direction that is away from the other circumferential groove wall and that is in the circumferential direction of the motor stator. In the radial direction of the motor stator, an inner groove width of the one circumferential groove is less than a sum of thicknesses of two flat wires. In the circumferential direction of the motor stator, an inner groove depth of the one circumferential groove is less than the width of the first flat wire or the second flat wire.

In this embodiment of this application, the one circumferential groove and at least one of the other flat wires in the winding groove are configured to jointly enclose the second cooling groove. A groove opening of the one circumferential groove faces at least one of the other flat wires, and in the circumferential direction of the motor stator, a surface of the at least one flat wire can be directly cooled by coolant in the one circumferential groove. The second cooling groove is formed by an inner groove wall of the winding groove, and the winding groove is formed on the motor stator. This helps improve structural strength of the second cooling groove.

In an embodiment, the motor stator further includes a plurality of injection molded parts, and each injection molded part is configured to wrap the plurality of flat wires accommodated in a groove wall of the winding groove. In an axial direction of the motor stator, each injection molded part is exposed relative to an end face of a stator iron core in the motor stator. Each injection molded part includes a liquid inlet, and the liquid inlet is configured to transmit the coolant to the first cooling groove. The liquid inlet is oriented in a direction that is away from a center of the motor stator and that is in the radial direction of the motor stator.

In this embodiment of this application, in the motor stator, the injection molded part can implement insulation between the winding groove and the plurality of flat wires. Specifically, the injection molded part is configured to wrap the plurality of flat wires in the winding groove, so that the plurality of flat wires are spaced from the winding groove through the injection molded part. After an alternating current transmitted by a motor control unit is applied to the flat wire winding, due to blocking of the injection molded part, the current cannot flow from the flat wire winding to the motor stator, thereby avoiding a short circuit and damage to the flat wire motor. In addition, the injection molded part prevents the flat wire winding from being eroded by environmental factors such as external moisture and impurities, thereby improving reliability and safety of the motor stator.

In this embodiment of this application, the liquid inlet of the injection molded part is configured to guide the coolant to the first cooling groove in a first injection molded section, to directly cool the first flat wire. The liquid inlet does not need to occupy space of the motor stator, thereby avoiding negative impact on structural strength and magnetic permeability of the motor stator caused by directly drilling a hole on the motor stator.

In an embodiment, one radial inner wall of the injection molded part includes one shoulder, and the one shoulder on the one radial inner wall and the first flat wire are arranged adjacently.

In this embodiment of this application, the one shoulder on the one radial inner wall is configured to enclose the first cooling groove together with the first flat wire. In the radial direction of the motor stator, the one radial inner wall and the one radial groove wall of the winding groove are arranged adjacently, and the one shoulder protrudes from the one radial groove wall toward the first flat wire, so that the one shoulder can fasten the first flat wire. A side surface that is of the one shoulder and that is in the circumferential direction of the motor stator can be used to enclose the first cooling groove together with the first flat wire. In other words, the gap between the one radial groove wall of the winding groove and the first flat wire is formed by using the one shoulder.

In this embodiment of this application, an inner groove wall of the winding groove is spaced from the plurality of flat wires through the injection molded part, to implement insulation between the motor stator and the flat wire winding. This helps ensure electrical safety of the flat wire motor. In the injection molded part, the one shoulder is used to fasten the radial surface of the first flat wire. The first flat wire cooperates with the one shoulder, so that a surface of the first flat wire is used to form the first cooling groove, and the coolant can directly dissipate heat for the first flat wire, thereby improving cooling efficiency, implementing temperature rise control on the flat wire winding, and avoiding damage to the flat wire motor and causing a safety accident. The one shoulder has functions of fastening the first flat wire and forming the first cooling groove. This helps implement structure reuse, and reduces costs.

In an embodiment, the other radial inner wall of the injection molded part includes the other shoulder, and the other shoulder on the other radial inner wall and the second flat wire are arranged adjacently.

In this embodiment of this application, the other shoulder on the other radial inner wall is configured to enclose the third cooling groove together with the second flat wire, and in the radial direction of the motor stator, the other radial inner wall and the other radial groove wall of the winding groove are arranged adjacently. The other shoulder protrudes from the other radial groove wall toward the second flat wire, so that the other shoulder can fasten the second flat wire. A side surface that is of the other shoulder and that is in the circumferential direction of the motor stator can be used to enclose the third cooling groove together with the second flat wire. In other words, the gap between the other radial groove wall of the winding groove and the second flat wire is formed by using the shoulder.

In an embodiment, in the radial direction of the motor stator, a spacing between the one shoulder on the one radial inner wall and the other shoulder on the other radial inner wall is less than a sum of thicknesses of the plurality of flat wires in the winding groove.

In this embodiment of this application, the plurality of flat wires need to be clamped between the one shoulder and the other shoulder, so that positions of the plurality of flat wires relative to the winding groove are not easily changed. If the injection molded part is unable to keep the positions of the plurality of flat wires relatively fixed, that is, the plurality of flat wires are displaced in a working process, currents in the plurality of flat wires are unevenly distributed. Consequently, local current density is excessively small or excessively large, and the motor stator generates noise, affecting NVH performance of the entire vehicle. In an embodiment, in the radial direction of the motor stator, a spacing between the one shoulder and the other shoulder is equal to a sum of thicknesses of the plurality of flat wires in the winding groove. This embodiment of this application helps reduce mounting difficulty of the plurality of flat wires.

In an embodiment, a radial length of a shoulder on each radial inner wall is greater than or equal to the thickness of the first flat wire. In this embodiment of this application, the radial length of the shoulder on each radial inner wall corresponds to the inner groove depth of the first cooling groove and the inner groove depth of the third cooling groove. This embodiment of this application helps improve flow rates of coolant in the first cooling groove and the third cooling groove, and enhances heat dissipation effect of the coolant on the first flat wire and the second flat wire.

In an embodiment, a radial length of a shoulder on each radial inner wall is greater than or equal to the thickness of the second flat wire. This embodiment of this application helps improve flow rates of coolant in the first cooling groove and the third cooling groove, and enhances heat dissipation effect of the coolant on the radial surface of the first flat wire and the radial surface of the second flat wire.

In an embodiment, a radial length of a shoulder on each radial inner wall is greater than or equal to the thickness of the first flat wire, the radial length of the shoulder on each radial inner wall is greater than or equal to the thickness of the second flat wire. This embodiment of this application helps improve flow rates of coolant in the first cooling groove and the third cooling groove, and enhances heat dissipation effect of the coolant on the first flat wire and the second flat wire.

In an embodiment, a circumferential width of a shoulder on each radial inner wall is less than the width of the first flat wire. This embodiment of this application can ensure that there is a gap between the first flat wire and a part of the one radial inner wall other than the one shoulder, and ensure that there is a gap between the second flat wire and a part of the other radial inner wall other than the other shoulder, so that the first flat wire and the second flat wire can be respectively configured to enclose the first cooling groove and the third cooling groove, to avoid a case in which the coolant cannot directly cool the first flat wire and the second flat wire. In addition, because both the one shoulder and the other shoulder are parts of the injection molded part, this embodiment of this application further helps reduce processing costs of the injection molded part.

In an embodiment, a circumferential width of a shoulder on each radial inner wall is less than the width of the second flat wire. This embodiment of this application helps avoid a case in which the coolant cannot directly cool the first flat wire and the second flat wire, and further helps reduce processing costs of the injection molded part.

In an embodiment, a circumferential width of a shoulder on each radial inner wall is less than the width of the first flat wire, and the circumferential width of the shoulder on each radial inner wall is less than the width of the second flat wire. This embodiment of this application helps avoid a case in which the coolant cannot directly cool the first flat wire and the second flat wire, and further helps reduce processing costs of the injection molded part.

In an embodiment, a cross section of the one shoulder on the one radial inner wall and a cross section of the other shoulder on the other radial inner wall have different shapes and areas. In this embodiment of this application, the cross section of the one shoulder and the cross section of the other shoulder have different shapes and areas in the radial direction of the motor stator, so that processing of the one radial inner wall and the other radial inner wall of the injection molded part is more flexible. This helps meet different requirements generated by different positions of the one shoulder and the other shoulder in the winding groove.

In an embodiment, each circumferential inner wall of the injection molded part includes two shoulders, the two shoulders on each circumferential inner wall are spaced apart in the radial direction of the motor stator, radial lengths of the two shoulders on each circumferential inner wall each are greater than the sum of the thicknesses of the two flat wires, and a radial spacing between the two shoulders on each circumferential inner wall is less than the sum of the thicknesses of the two flat wires.

In this embodiment of this application, the two shoulders on the one circumferential inner wall in the circumferential direction of the motor stator protrude away from the other circumferential groove wall, that is, a gap between the one circumferential groove wall of the winding groove and at least one of the other flat wires is formed by using the two shoulders. A spacing between the two shoulders in the radial direction of the motor stator is less than the sum of the thicknesses of the two flat wires, and radial space between the two shoulders is used to form the second cooling groove together with the at least one flat wire. Lengths of the two shoulders in the radial direction of the motor stator each are greater than the sum of the thicknesses of the two flat wires, so that each shoulder can fasten at least two of the plurality of flat wires.

According to a second aspect, an embodiment of this application provides a powertrain. The powertrain includes a motor control unit, a reducer, an oil pump, and the flat wire motor according to any embodiment of the first aspect. The motor control unit is configured to supply an alternating current to a flat wire winding of the flat wire motor, the flat wire motor is configured to be in transmission connection with the reducer, and the oil pump is configured to transmit coolant to directly cool a flat wire winding of the flat wire motor.

In this embodiment of this application, the flat wire motor according to the first aspect is used in the powertrain. Because the flat wire winding of the flat wire motor can be directly cooled, working efficiency and safety performance of the flat wire motor are enhanced, thereby helping improve power density of the powertrain, and ensuring the safety performance of the powertrain.

According to a third aspect, an embodiment of this application provides an electric vehicle. The electric vehicle includes a vehicle frame, a battery pack, and the powertrain according to the second aspect. The vehicle frame is configured to fasten the battery pack and the powertrain. The battery pack is configured to supply power to a flat wire motor through a motor control unit. The flat wire motor is configured to drive wheels of the electric vehicle through a reducer.

In this embodiment of this application, the powertrain according to the second aspect is used in the electric vehicle, to help ensure smooth and safe driving of the electric vehicle.

### BRIEF DESCRIPTION OF DRAWINGS

To describe technical solutions in embodiments of this application more clearly, the following describes accompanying drawings used in embodiments of this application.
FIG. 1 is a diagram of a structure of an electric vehicle according to an embodiment of this application;
FIG. 2 is a diagram of a structure of a powertrain according to an embodiment of this application;
FIG. 3 is a diagram of a structure of a motor stator according to an embodiment of this application;
FIG. 4 is a partial sectional view of a motor stator according to an embodiment of this application;
FIG. 5 is another partial sectional view of a motor stator according to an embodiment of this application;
FIG. 6 is another partial sectional view of a motor stator according to an embodiment of this application;
FIG. 7 is another partial sectional view of a motor stator according to an embodiment of this application;
FIG. 8 is another partial sectional view of a motor stator according to an embodiment of this application;
FIG. 9 is another partial sectional view of a motor stator according to an embodiment of this application;
FIG. 10 is another partial sectional view of a motor stator according to an embodiment of this application;
FIG. 11 is another partial sectional view of a motor stator according to an embodiment of this application;
FIG. 12 is another partial sectional view of a motor stator according to an embodiment of this application;
FIG. 13 is another partial sectional view of a motor stator according to an embodiment of this application;
FIG. 14 is a diagram of another structure of a motor stator according to an embodiment of this application;
FIG. 15 is an exploded view of a motor stator according to an embodiment of this application;
FIG. 16 is a partial sectional view of an injection molded part according to an embodiment of this application;
FIG. 17 is another partial sectional view of a motor stator according to an embodiment of this application; and
FIG. 18 is a diagram of another structure of a motor stator according to an embodiment of this application.

### DESCRIPTION OF EMBODIMENTS

The following describes technical solutions in embodiments of this application with reference to accompanying drawings in embodiments of this application. It is clear that the described embodiments are merely a part rather than all of embodiments of this application.

For ease of understanding, the following first explains and describes English abbreviations and related technical terms in embodiments of this application.

NVH is an abbreviation for noise, vibration, and harshness, and is used to measure design and manufacturing quality of vehicles.

Parallelism: Parallelism defined in embodiments of this application is not limited to absolute parallelism, and the definition of parallelism herein may be understood as basic parallelism, and includes non-absolute parallelism caused by factors such as an assembly tolerance, a design tolerance, and impact of structure flatness.

Currently, a flat wire winding of a flat wire motor has a problem of low cooling efficiency. To resolve the foregoing problem, embodiments of this application provide a flat wire motor with a directly cooled flat wire winding. A motor stator of the flat wire motor includes a plurality of winding grooves that are spaced apart in a circumferential direction of the motor stator. The flat wire winding includes a plurality of connected flat wires, and each winding groove is configured to accommodate a plurality of flat wires. The plurality of flat wires in the winding groove include a first flat wire and a second flat wire, and the first flat wire and the second flat wire in the winding groove are respectively arranged on two sides of other flat wires in the plurality of flat wires in a radial direction of the motor stator. One radial groove wall of the winding groove and the first flat wire are adjacently arranged in the radial direction of the motor stator, a gap between the one radial groove wall of the winding groove and the first flat wire is used as a first cooling groove, the first cooling groove is configured to transmit coolant to directly cool the first flat wire, and the first cooling groove is formed by using a part of a radial surface of the first flat wire, to help increase a contact area between the coolant and the first flat wire. In the circumferential direction of the motor stator, an inner groove width of the first cooling groove is less than a width of the first flat wire, to prevent the first flat wire from falling into the first cooling groove.

In embodiments of this application, the first cooling groove is formed by using the gap between the one radial side wall of the winding groove and the first flat wire, and the first cooling groove can cool and fasten the first flat wire. This helps improve cooling efficiency of the flat wire winding, and ensures that the first flat wire is stably arranged on a side of the other flat wires in the radial direction of the motor stator. The flat wire motor provided in embodiments of this application is used in a powertrain, and the powertrain including the flat wire motor in this application is used in an electric vehicle.

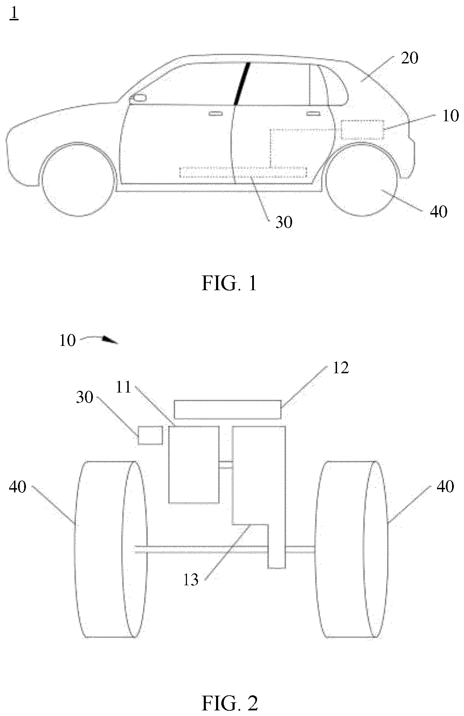

FIG. 1 is a diagram of a structure of an electric vehicle 1 according to an embodiment of this application. In this embodiment of this application, the electric vehicle 1 is a wheeled device driven or pulled by a power apparatus. In this embodiment of this application, the electric vehicle 1 includes a vehicle frame 20, a powertrain 10, a battery pack 30, and wheels 40. The vehicle frame 20 is a structural framework of the electric vehicle 1, the vehicle frame 20 is configured to mount the powertrain 10, the battery pack 30, and the wheels 40, and the vehicle frame 20 can bear internal and external environmental loads of the electric vehicle 1. The battery pack 30 is configured to supply power to the powertrain 10. The powertrain 10 is configured to drive the wheels 40 of the electric vehicle 1. The battery pack 30 is also referred to as a power battery.

FIG. 2 is a diagram of a structure of the powertrain 10 according to an embodiment of this application. In this embodiment of this application, the powertrain 10 includes a flat wire motor 11 and a motor control unit 12. The motor control unit 12 is configured to: convert a direct current provided by the battery pack 30 into an alternating current, and transmit the alternating current to a flat wire winding of the flat wire motor 11. In an embodiment, the powertrain 10 further includes a reducer 13. The flat wire motor 11 is in transmission connection with the reducer 13 to drive the wheels 40 to rotate.

In a working process of the flat wire motor, resistance generated when a current flows through the flat wire winding causes an energy loss, and lost energy is gradually converted into heat. As a result, a temperature of the flat wire winding continuously increases. If cooling effect on the flat wire winding is not good, a service life of the flat wire winding is directly shortened and working efficiency of the flat wire motor is reduced, and an electrical fault and a safety accident may be caused in a serious case.

In embodiments of this application, a manner of cooling the flat wire winding in the flat wire motor is improved, so that coolant can be in direct contact with a radial surface of the flat wire winding, to improve cooling efficiency of the flat wire winding, thereby avoiding negative impact on the flat wire winding and the flat wire motor, and improving safety performance of the electric vehicle.

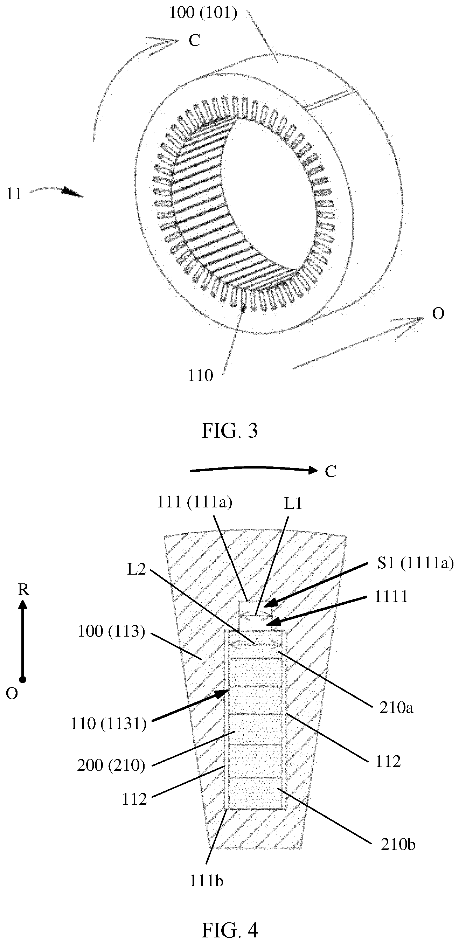

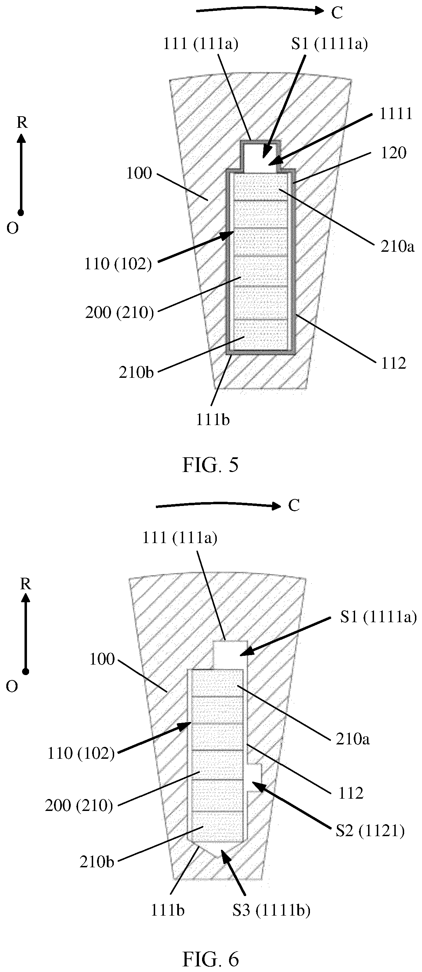

Refer to FIG. 3 to FIG. 5. FIG. 3 is a diagram of a structure of a motor stator 100 according to an embodiment of this application. FIG. 4 is a partial sectional view of the motor stator 100 according to an embodiment of this application. FIG. 5 is another partial sectional view of the motor stator 100 according to an embodiment of this application.

As shown in FIG. 3, the motor stator 100 of the flat wire motor 11 includes a plurality of winding grooves 110, and the plurality of winding grooves 110 are spaced apart in a circumferential direction C of the motor stator 100. As shown in FIG. 4 and FIG. 5, a flat wire winding 200 includes a plurality of connected flat wires 210, and each winding groove 110 is configured to accommodate the plurality of flat wires 210. The plurality of flat wires 210 in the winding groove 110 include a first flat wire 210a and a second flat wire 210b, and the first flat wire 210a and the second flat wire 210b in the winding groove 110 are respectively arranged on two sides of other flat wires 210 in the plurality of flat wires 210 in a radial direction R of the motor stator 100. One radial groove wall 111 of the winding groove 110 and the first flat wire 210a are adjacently arranged in the radial direction R of the motor stator 100, and a gap between the one radial groove wall 111 of the winding groove 110 and the first flat wire 210a is used as a first cooling groove S1. The first cooling groove S1 is configured to transmit coolant to directly cool the first flat wire 210a, and in the circumferential direction C of the motor stator 100, an inner groove width of the first cooling groove S1 is less than a width of the first flat wire 210a.

In embodiments of this application, a quantity of the plurality of flat wires 210 is greater than or equal to 3. In an embodiment, a quantity of the plurality of flat wires 210 is 6, a quantity of the other flat wires 210 is 4, and the four other flat wires 210 are arranged between the first flat wire 210a and the second flat wire 210b. In an embodiment, two adjacent flat wires 210 in the radial direction R of the motor stator 100 are insulated from each other, and each flat wire 210 is insulated from the motor stator 100. In an embodiment, an outer surface of each flat wire 210 includes insulation paint. In an embodiment, a layer of insulation material is arranged between the two adjacent flat wires 210 in the radial direction R of the motor stator 100. In an embodiment, a layer of insulation material is arranged between each flat wire 210 and the motor stator 100. In an embodiment, the insulation material includes insulation paper or an injection molded part.

In embodiments of this application, the one radial groove wall 111 of the winding groove 110 is an inner groove wall of the winding groove 110 in the radial direction R of the motor stator 100. For ease of description, two radial groove walls 111 of the same winding groove 110 are referred to as: a radial groove wall 111a and the other radial groove wall 111b. In the winding groove 110, the plurality of flat wires 210 are sequentially arranged between the radial groove wall 111a and the other radial groove wall 111b in the radial direction R of the motor stator 100. The plurality of flat wires 210 include the first flat wire 210a and the second flat wire 210b, and the first flat wire 210a and the second flat wire 210b are respectively located on two sides of the other flat wires 210 in the plurality of flat wires 210 in the radial direction R of the motor stator 100. In other words, the other flat wires 210 are arranged between the first flat wire 210a and the second flat wire 210b in the radial direction R of the motor stator 100. A radial distance between the first flat wire 210a and the radial groove wall 111a is less than a radial distance between the second flat wire 210b and the radial groove wall 111a.

In embodiments of this application, when the flat wire motor 11 is in a working state, currents are centrally distributed on outer circumferential surfaces of the plurality of flat wires 210 in each winding groove 110 due to skin effect. This is equivalent to reducing effective electrification areas of the plurality of flat wires 210, increasing equivalent resistance of the plurality of flat wires 210, and increasing a resistance loss of the flat wire winding 200. As a result, heat of the flat wire winding 200 continuously increases.

As shown in FIG. 3 to FIG. 5, the gap between the first flat wire 210a and the radial groove wall 111a in the same winding groove 110 is used to form the first cooling groove S1, and the first cooling groove S1 transmits the coolant to directly cool the outermost first flat wire 210a in the flat wire winding 200, so that heat generated by the first flat wire 210a can be directly taken away by the coolant, and a temperature of the flat wire winding can be effectively reduced. In an embodiment, the coolant is any one of glycol cooling oil, synthetic oil, and mineral oil.

The flat wire 210 is a wire in a flat shape. To be specific, a surface area of the single flat wire 210 in the radial direction R of the motor stator 100 is greater than a surface area of the single flat wire 210 in the circumferential direction C of the motor stator 100. The first cooling groove S1 in embodiments of this application is located on a side of the first flat wire 210a in the radial direction R of the motor stator 100, so that the coolant in the first cooling groove S1 can dissipate heat for a radial surface of the first flat wire 210a in the radial direction R of the motor stator 100. Compared with a manner of dissipating heat for a circumferential surface of the first flat wire 210a in the circumferential direction C of the motor stator 100, embodiments of this application help increase an effective contact area between the coolant and the first flat wire 210a, and improves cooling efficiency.

As shown in FIG. 4, in the circumferential direction C of the motor stator 100, the inner groove width of the first cooling groove S1 is denoted as L1, and the width of the first flat wire 210a is denoted as L2. The first cooling groove S1 is located on the side of the first flat wire 210a in the radial direction R of the motor stator 100, and L1 is less than L2. Therefore, there is no risk of the first flat wire 210a falling into the first cooling groove S1. This is equivalent to that the first cooling groove S1 can not only directly cool the radial surface of the first flat wire 210a to increase a cooling area, but also fasten the first flat wire 210a in the radial direction R of the motor stator 100, so that the first flat wire 210a is stably arranged on the side of the other flat wires 210 in the radial direction R of the motor stator 100, thereby improving electromagnetic performance of the flat wire winding 200. If L1 is greater than or equal to L2, because the first cooling groove S1 cannot fasten the first flat wire 210a, the first flat wire 210a falls into the first cooling groove S1. Consequently, cooling effect of the coolant and an electromagnetic energy conversion process of the flat wire winding 200 are adversely affected.

In addition, the second flat wire 210b and the other flat wires 210 in the plurality of flat wires 210 can also indirectly exchange heat with the coolant through the first flat wire 210a. This helps reduce overall thermal resistance of the flat wire winding 200, and improves cooling efficiency. The coolant directly cools the first flat wire 210a, so that the flat wire winding 200 works at a proper temperature. This helps prolong a service life of the flat wire winding 200, improves safety performance, reduces a heat loss of the flat wire winding 200, and increases power of the flat wire motor 11.

In embodiments of this application, the gap between the radial groove wall 111a of the winding groove 110 and the first flat wire 210a is used to form the first cooling groove S1, and the inner groove width of the first cooling groove S1 is less than the width of the first flat wire 210a, so that the first cooling groove S1 can directly cool and fasten the radial surface of the first flat wire 210a. This helps improve cooling effect of the coolant on the first flat wire 210a, reduces a heat loss of the motor, avoids radial displacement of the first flat wire 210a in the winding groove 110, and ensures normal driving of an electric vehicle.

It should be noted that FIG. 4 merely schematically shows structures of the winding groove 110 and the plurality of flat wires 210, and in an actual application scenario, to implement insulation between the winding groove 110 and the plurality of flat wires 210, an injection molded part 120 shown in FIG. 5 is added between the winding groove 110 and the plurality of flat wires 210. However, in the motor stator 100 shown in FIG. 4, structural features such as a shape and a size of the first cooling groove S1 are directly determined by an inner groove wall of the winding groove 110, and are not affected by the injection molded part 120. The injection molded part 120 is only injection molded on the inner groove wall of the winding groove 110, and a thickness of an inner wall of the injection molded part 120 remains unchanged. Therefore, to simplify illustration, the injection molded part 120 shown in FIG. 5 is omitted in FIG. 4. Similarly, the injection molded part is also omitted in FIG. 6 to FIG. 10 in this application. In an embodiment, the motor stator 100 uses structures shown in FIG. 4 and FIG. 6 to FIG. 10, and outer circumferential surfaces of the plurality of flat wires 210 include insulation paint.

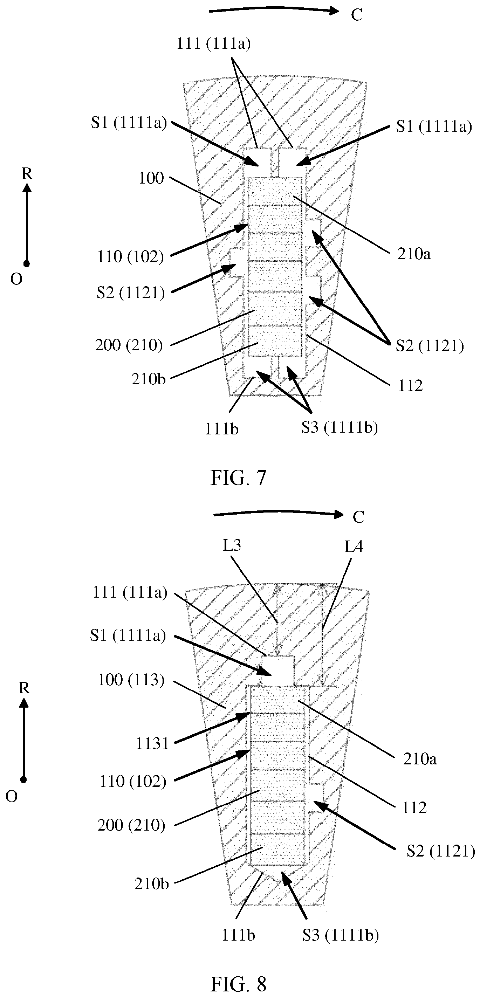

Refer to FIG. 6 and FIG. 7. FIG. 6 is another partial sectional view of the motor stator 100 according to an embodiment of this application, and FIG. 7 is another partial sectional view of the motor stator 100 according to an embodiment of this application. In an embodiment, the plurality of flat wires 210 in the winding groove 110 are arranged in the radial direction R of the motor stator 100, and in addition to cooling the first flat wire 210a, the coolant in the first cooling groove S1 can be also used to directly cool the other flat wires 210 in the plurality of flat wires 210. In the circumferential direction C of the motor stator 100, the inner groove width of the first cooling groove S1 is less than a width of each flat wire 210 in the winding groove 110, and an inner groove width of the winding groove 110 is greater than the width of each flat wire 210 in the winding groove 110.

In embodiments of this application, as shown in FIG. 6 and FIG. 7, in the circumferential direction C of the motor stator 100, it is inevitable that there is a crack 102 between one circumferential groove wall 112 of the winding groove 110 and the plurality of flat wires 210, that is, the inner groove width of the winding groove 110 is greater than the width of each flat wire 210 in the winding groove 110, and the crack 102 can be used for the coolant to flow in the radial direction R of the motor stator 100. When the first cooling groove S1 communicates with the crack 102, the coolant in the first cooling groove S1 can directly exchange heat with the first flat wire 210a and the other flat wires 210, thereby greatly increasing a contact area between the coolant and the flat wire winding 200, and improving heat dissipation effect.

As shown in FIG. 6, the first cooling groove S1 is close to one end of the first flat wire 210a in the circumferential direction C of the motor stator 100, and in the radial direction R of the motor stator 100, the first cooling groove S1 partially overlaps a projection of the crack 102. As shown in FIG. 7, a gap between the radial groove wall 111a of the winding groove 110 and the first flat wire 210a can form two first cooling grooves S1, the two first cooling grooves S1 are respectively close to two ends of the first flat wire 210a in the circumferential direction C of the motor stator 100, and in the radial direction R of the motor stator 100, each of the two first cooling grooves S1 overlaps the projection part of the crack 102.

In embodiments of this application, in the circumferential direction C of the motor stator 100, the inner groove width of the first cooling groove S1 is less than the width of each flat wire 210 in the winding groove 110, so that each flat wire 210 in the winding groove 110 does not fall into the first cooling groove S1, thereby ensuring that the coolant can stably flow into the first cooling groove S1.

Still refer to FIG. 7. In an embodiment, the coolant in the first cooling groove S1 not only passes through the crack 102, but also passes through a second cooling groove S2 to directly cool the other flat wires 210. The one circumferential groove wall 112 of the winding groove 110 and the plurality of flat wires 210 in the winding groove 110 are arranged adjacently in the circumferential direction C of the motor stator 100. A gap between the one circumferential groove wall 112 of the winding groove 110 and at least one of the other flat wires 210 is used as the second cooling groove S2, and the second cooling groove S2 is configured to transmit the coolant to directly cool the at least one flat wire 210. When the first cooling groove S1 communicates with the second cooling groove S2, the coolant can be transmitted from the first cooling groove S1 to the second cooling groove S2, to directly cool the other flat wires 210.

In embodiments of this application, the one circumferential groove wall 112 of the winding groove 110 is an inner groove wall of the winding groove 110 in the circumferential direction C of the motor stator 100.

In embodiments of this application, the coolant in the second cooling groove S2 can be in direct contact with a surface that is of the at least one flat wire 210 and that faces the winding groove 110 in the circumferential direction C of the motor stator 100, to direct cool at least one of the other flat wires 210. As shown in FIG. 7, the first cooling groove S1 communicates with the second cooling groove S2 through the crack 102, so that the coolant can sequentially flow through the first cooling groove S1, the crack 102, and the second cooling groove S2. This helps expand a cooling range of the coolant in the first cooling groove S1, and improves utilization of the coolant.

Still refer to FIG. 7. In an embodiment, the first cooling groove S1 is further configured to transmit the coolant to directly cool the second flat wire 210b in the plurality of flat wires 210. The other radial groove wall 111b of the winding groove 110 and the second flat wire 210b are arranged adjacently and spaced apart in the radial direction R of the motor stator 100. A gap between the other radial groove wall 111b of the winding groove 110 and the second flat wire 210b is used as a third cooling groove S3, and the third cooling groove S3 can be configured to transmit the coolant to directly cool the second flat wire 210b. When the first cooling groove S1 communicates with the third cooling groove S3, the coolant can be transmitted from the first cooling groove S1 to the third cooling groove S3, to directly cool the second flat wire 210b.

In embodiments of this application, the plurality of flat wires 210 in the winding groove 110 are arranged between the radial groove wall 111a and the other radial groove wall 111b in the radial direction R of the motor stator 100. When the coolant flows into the third cooling groove S3, heat generated by the second flat wire 210b can be directly taken away by the coolant. The second flat wire 210b is a wire in a flat shape. To be specific, an area of a radial surface of the second flat wire 210b is greater than an area of a circumferential surface of the second flat wire 210b. Therefore, that the third cooling groove S3 is located on a side of the second flat wire 210b in the radial direction R of the motor stator 100 helps increase a contact area between the coolant in the third cooling groove S3 and the second flat wire 210b.

As shown in FIG. 7, the first cooling groove S1, the second cooling groove S2, and the third cooling groove S3 in the winding groove 110 communicate with each other, and after the coolant is introduced into the first cooling groove S1, the coolant flows through the first cooling groove S1, the second cooling groove S2, and the third cooling groove S3, to directly cool the second flat wire 210b. Embodiments of this application help reduce an amount of the coolant and reduce costs. In addition, the coolant surrounds outer circumferential sides of the plurality of flat wires 210, so that each of the plurality of flat wires 210 can be in direct contact with the coolant.

It should be noted that FIG. 8 is another partial sectional view of the motor stator 100 according to an embodiment of this application. In an embodiment, the first cooling groove S1, the second cooling groove S2, and the third cooling groove S3 in the winding groove 110 are independent of each other, and coolant is respectively introduced into the first cooling groove S1, the second cooling groove S2, and the third cooling groove S3. Although an amount of the coolant increases, coolant in different cooling grooves does not mix or affect each other, so that cooling effect is correspondingly improved. As shown in FIG. 6, in an embodiment, the first cooling groove S1 and the second cooling groove S2 in the winding groove 110 communicate with each other and are both independent of the third cooling groove S3, and coolant is separately introduced into the first cooling groove S1 and the third cooling groove S3, to directly cool the first flat wire 210a, the second flat wire 210b, and the other flat wires 210.

Still refer to FIG. 7. In an embodiment, a quantity of first cooling grooves S1 in the winding groove 110 is greater than or equal to 1. A gap between the one radial groove wall 111a of at least one winding groove 110 and the first flat wire 210a is configured to form a plurality of first cooling grooves S1, and the plurality of first cooling grooves S1 are configured to transmit the coolant to directly cool the first flat wire 210a. In the winding groove 110, the plurality of first cooling grooves S1 are spaced apart in the circumferential direction C of the motor stator 100, and in the circumferential direction C of the motor stator 100, an inner groove width of each first cooling groove S1 is less than the width of the first flat wire 210a.

In this embodiment of this application, the plurality of first cooling grooves S1 are formed in the winding groove 110. This helps improve heat exchange efficiency between the coolant and the first flat wire 210a. To prevent the first flat wire 210a from falling into any one of the plurality of first cooling grooves S1, the inner groove width of each first cooling groove S1 needs to be less than the width of the first flat wire 210a. In an embodiment, in the circumferential direction C of the motor stator 100, a sum of inner groove widths of the plurality of first cooling grooves S1 is greater than the width of the first flat wire 210a. This helps increase a flow rate of the coolant in the plurality of first cooling grooves S1.

In an embodiment, at least one of the plurality of first cooling grooves S1 in the winding groove 110 is configured to transmit the coolant to directly cool the plurality of flat wires 210, and in the circumferential direction C of the motor stator 100, a sum of inner groove widths of the plurality of first cooling grooves S1 is less than a width of each flat wire 210 in the winding groove 110. This embodiment of this application helps increase a contact area between the coolant and the plurality of flat wires 210, and improves cooling and heat dissipation efficiency.

Still refer to FIG. 7. In an embodiment, a quantity of second cooling grooves S2 in the winding groove 110 is greater than or equal to 1. In an embodiment, a gap between the one circumferential groove wall 112 of the winding groove 110 and at least one of the other flat wires 210 is configured to form a plurality of second cooling grooves S2. In an embodiment, a gap between the one circumferential groove wall 112 of the winding groove 110 and at least one of the other flat wires 210 and a gap between the other circumferential groove wall 112 and at least one of the other flat wires 210 are used to form a plurality of second cooling grooves S2. In this embodiment of this application, more second cooling grooves S2 in the winding groove 110 help further expand a cooling range of the coolant, so that heat can be exchanged with the coolant on more surfaces of the plurality of flat wires 210.

Still refer to FIG. 7. In an embodiment, a quantity of third cooling grooves S3 in the winding groove 110 is greater than or equal to 1. A gap between the other radial groove wall 111b of at least one winding groove 110 and the second flat wire 210b is used to form a plurality of third cooling grooves S3, and the plurality of third cooling grooves S3 are configured to transmit the coolant to directly cool the second flat wire 210b. In the winding groove 110, the plurality of third cooling grooves S3 are spaced apart in the circumferential direction C of the motor stator 100, and in the circumferential direction C of the motor stator 100, an inner groove width of each third cooling groove S3 is less than a width of the second flat wire 210b.

In this embodiment of this application, the plurality of third cooling grooves S3 are formed in the winding groove 110. This helps improve heat exchange efficiency between the coolant and the second flat wire 210b. To prevent the second flat wire 210b from falling into any one of the plurality of third cooling grooves S3, the inner groove width of each third cooling groove S3 needs to be less than the width of the second flat wire 210b. In an embodiment, in the circumferential direction C of the motor stator 100, a sum of inner groove widths of the plurality of third cooling grooves S3 is greater than the width of the second flat wire 210b. This helps increase a flow rate of the coolant in the plurality of third cooling grooves S3.

Still refer to FIG. 8. In an embodiment, in the radial direction R of the motor stator 100, a distance between the first cooling groove S1 and an outer circumferential surface of the motor stator 100 is less than a distance between each flat wire 210 in the winding groove 110 and the outer circumferential surface of the motor stator 100, and the inner groove depth of the first cooling groove S1 is less than or equal to a thickness of the first flat wire 210a.

In this embodiment of this application, in the radial direction R of the motor stator 100, the distance between the first cooling groove S1 and the outer circumferential surface of the motor stator 100 is denoted as L3, and the distance between each flat wire 210 in the winding groove 110 and the outer circumferential surface of the motor stator 100 is denoted as L4. L3 is less than L4, that is, the first cooling groove S1 is closer to the outer circumferential surface of the motor stator 100 in the radial direction R of the motor stator 100 than each flat wire 210 in the winding groove 110. This is convenient for introducing the coolant from the outer circumferential surface of the motor stator 100 into the first cooling groove S1.

In embodiments of this application, the first cooling groove S1 is formed in each winding groove 110, and the inner groove depth of the first cooling groove S1 is less than or equal to the thickness of the first flat wire 210a. This helps properly allocate flow rates of coolant in first cooling grooves S1 in different winding grooves 110, so that the plurality of flat wires 210 in each winding groove 110 can be in contact with the coolant. When a same winding groove 110 includes the first cooling groove S1, the second cooling groove S2, and the third cooling groove S3 that communicate with each other, controlling the inner groove depth of the first cooling groove S1 within a proper range further helps prevent excessive coolant from concentrating in the first cooling groove S1, to avoid reducing cooling effect of the coolant in the second cooling groove S2 and the third cooling groove S3.

In an embodiment, in the radial direction R of the motor stator 100, the inner groove depth of the first cooling groove S1 is greater than the thickness of the first flat wire 210a and less than a sum of thicknesses of two flat wires 210 in the winding groove 110. In this embodiment of this application, a surface area of the first flat wire 210a in the radial direction R of the motor stator 100 is greater than a surface area of the first flat wire 210a in the circumferential direction C of the motor stator 100, and the inner groove depth of the first cooling groove S1 falls between the thickness of the first flat wire 210a and the sum of the thicknesses of the two flat wires 210. This helps increase a flow rate of coolant in contact with a radial surface of the first flat wire 210a, and balances distribution of flow rates of the coolant in the second cooling groove S2 and the third cooling groove S3.

In an embodiment, an inner groove depth of the second cooling groove S2 in the circumferential direction C of the motor stator 100 is less than an inner groove depth of the first cooling groove S1 in the radial direction R of the motor stator 100. In the radial direction R of the motor stator 100, an inner groove width of the second cooling groove S2 is less than a sum of thicknesses of at least one flat wire 210.

In embodiments of this application, the inner groove depth of the first cooling groove S1 in the radial direction R of the motor stator 100 is greater than the inner groove depth of the second cooling groove S2 in the circumferential direction C of the motor stator 100, so that coolant in the winding groove 110 is mainly concentrated in the first cooling groove S1. In addition, a contact area between the coolant in the first cooling groove S1 and the first flat wire 210a is greater than a contact area between the coolant in the second cooling groove S2 and the at least one flat wire 210, so that flow rates of the coolant in the first cooling groove S1 and the second cooling groove S2 are properly allocated. This helps expand a cooling range of the coolant on outer surfaces of the plurality of flat wires 210, and enhances cooling effect.

FIG. 8 is used as an example. It should be noted that, in the circumferential direction C of the motor stator 100, a gap between the one circumferential groove wall 112 and at least one flat wire 210 is not equivalent to the crack 102 between the one circumferential groove wall 112 and the plurality of flat wires 210. Different from the second cooling groove S2, a circumferential length of the crack 102 is insufficient to form a groove-shaped structure for transmitting a large amount of coolant, and the crack 102 is configured to communicate with the second cooling groove S2. FIG. 8 merely schematically shows that there is the crack 102 between the one circumferential groove wall 112 and the plurality of flat wires 210, and does not represent an actual size of the crack 102. The foregoing descriptions are also applicable to other accompanying drawings in this application.

In embodiments of this application, in the radial direction R of the motor stator 100, the inner groove width of the second cooling groove S2 is less than the sum of thicknesses of the at least one flat wire 210, so that the second cooling groove S2 can cool and fasten the at least one flat wire 210. In an embodiment, the second cooling groove S2 is configured to transmit the coolant to directly cool two flat wires 210, and in the radial direction R of the motor stator 100, the inner groove width of the second cooling groove S2 is less than a sum of thicknesses of the two flat wires 210.

In an embodiment, in the circumferential direction C of the motor stator 100, an inner groove width of the third cooling groove S3 is less than the width of the second flat wire 210b. In the radial direction R of the motor stator 100, an inner groove depth of the third cooling groove S3 is less than the inner groove depth of the first cooling groove S1.

In embodiments of this application, in the circumferential direction C of the motor stator 100, the inner groove width of the third cooling groove S3 is less than the width of the second flat wire 210b, so that inner groove space of the third cooling groove S3 is not occupied by the second flat wire 210b. This ensures that the coolant can be stably transmitted in the third cooling groove S3, and can further avoid displacement, in the winding groove 110, of the second flat wire 210b relative to the third cooling groove S3 in the radial direction R of the motor stator 100.

In embodiments of this application, in the radial direction R of the motor stator 100, the inner groove depth of the third cooling groove S3 is less than the inner groove depth of the first cooling groove S1, so that a flow rate of coolant in the first cooling groove S1 is greater than that of the third cooling groove S3. In the radial direction R of the motor stator 100, a distance between the first cooling groove S1 and the outer circumferential surface of the motor stator 100 is less than a distance between the third cooling groove S3 and the outer circumferential surface of the motor stator 100, and the inner groove depth of the first cooling groove S1 is greater than that of the third cooling groove S3, so that a large amount of coolant can first flow into the first cooling groove S1, thereby reducing a loss of the coolant on a transmission path.

In an embodiment, in the radial direction R of the motor stator 100, the inner groove depth of the third cooling groove S3 is greater than a thickness of the second flat wire 210b. This embodiment of this application helps improve a flow rate of the coolant in the third cooling groove S3, and enhances heat dissipation effect of the coolant in the third cooling groove S3 on the second flat wire 210b.

In an embodiment, in the radial direction R of the motor stator 100, the inner groove depth of the third cooling groove S3 is less than a sum of thicknesses of two flat wires 210 in the winding groove 110. In embodiments of this application, in the radial direction R of the motor stator 100, the other radial groove wall 111b of the winding groove 110 is closer to an inner circumferential surface of the motor stator 100 than the radial groove wall 111a, the inner circumferential surface of the motor stator 100 needs to be connected to a motor rotor or a motor shaft, and the inner groove depth of the third cooling groove S3 is less than the sum of the thicknesses of the two flat wires 210 in the winding groove 110. Therefore, controlling a size of a gap between the other radial groove wall 111b of the winding groove 110 and the second flat wire 210b within a proper range helps enhance structural strength of the motor stator 100, and improves stability of a connection between the motor stator 100 and the motor rotor or the motor shaft.

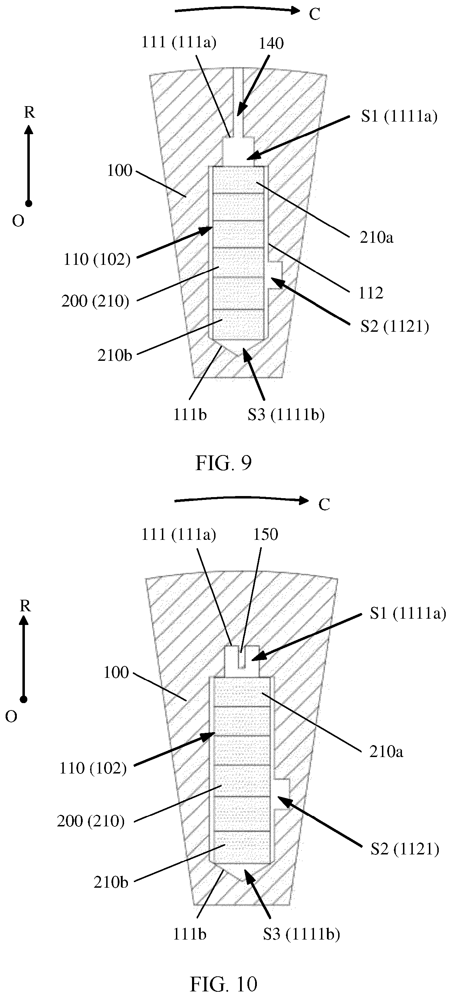

FIG. 9 is another partial sectional view of the motor stator 100 according to an embodiment of this application. In an embodiment, the motor stator 100 includes at least one radial flow path 140, and the radial flow path 140 is configured to connect the first cooling groove S1 to the outer circumferential surface of the motor stator 100 in the radial direction R of the motor stator 100.

In this embodiment of this application, in the radial direction R of the motor stator 100, the outer circumferential surface of the motor stator 100, the radial flow path 140, and the first cooling groove S1 are sequentially arranged. The radial flow path 140 is configured to guide the coolant from the outer circumferential surface of the motor stator 100 to the first cooling groove S1. The first cooling groove S1 is closer to the outer circumferential surface of the motor stator 100 than each flat wire 210 in the winding groove 110. This helps shorten a flow path of the coolant flowing into the first cooling groove S1, reduces a loss of the coolant on a transmission path, and improves utilization and cooling effect of the coolant. In an embodiment, a quantity of radial flow paths 140 of the motor stator 100 is less than or equal to a quantity of first cooling grooves S1, and each radial flow path 140 communicates with at least one first cooling groove S1 in each winding groove 110.

FIG. 10 is another partial sectional view of the motor stator 100 according to an embodiment of this application. In an embodiment, first cooling grooves S1 of the plurality of winding grooves 110 are spaced apart in the circumferential direction C of the motor stator 100, at least one first cooling groove S1 includes a protrusion 150, the protrusion 150 is configured to separate the first cooling groove S1, and in the radial direction R of the motor stator 100, a length of the protrusion 150 is less than or equal to a length of the first cooling groove S1.

In this embodiment of this application, a protrusion direction of the protrusion 150 is parallel to the radial direction R of the motor stator 100, and the protrusion 150 is configured to separate the first cooling groove S1 into two first cooling sub-grooves. The protrusion 150 has a function of guiding flow of the coolant, and can further buffer impact force of the coolant in a specific direction, to improve heat dissipation effect. When a radial length of the protrusion 150 is less than a radial length of the first cooling groove S1, the two first cooling sub-grooves located on two sides of the protrusion 150 communicate with each other, so that the protrusion 150 can further have a flow disturbing function, to enhance turbulence of the coolant. When the radial length of the protrusion 150 is equal to the radial length of the first cooling groove S1, the protrusion 150 can assist in fastening the first flat wire 210a, to avoid a position offset of the first flat wire 210a in the radial direction R of the motor stator 100.

In an embodiment, the protrusion 150 and the radial groove wall 111a of the winding groove 110 are integrally formed. In another embodiment, the protrusion 150 and the radial groove wall 111a of the winding groove 110 are of a split structure, and the protrusion 150 protrudes from the radial groove wall 111a of the winding groove 110 toward the first flat wire 210a in the radial direction R of the motor stator 100.

Still refer to FIG. 10. In an embodiment, in the circumferential direction C of the motor stator 100, a width of the protrusion 150 is less than half the width of the first flat wire 210a. In this embodiment of this application, the protrusion 150 can be prevented from occupying excessive space in the first cooling groove S1 in the circumferential direction C of the motor stator 100, to ensure that the first cooling groove S1 can accommodate sufficient coolant, to dissipate heat for the flat wire winding 200.

In the motor stators 100 shown in FIG. 4 to FIG. 10, structural features of the first cooling groove S1, the second cooling groove S2, and the third cooling groove S3 are jointly determined by different inner groove walls of the winding groove 110 and the plurality of flat wires 210 in the winding groove 110.

Still refer to FIG. 4 and FIG. 5. In an embodiment, the radial groove wall 111a of the winding groove 110 includes one radial groove 1111, the one radial groove 1111 is concave in a direction that is away from the other radial groove wall 111b and that is in the radial direction R of the motor stator 100, and the one radial groove 1111 on the radial groove wall 111a is configured to enclose the first cooling groove S1 together with the first flat wire 210a.

In embodiments of this application, for ease of description, the one radial groove 1111 on the radial groove wall 111a in the winding groove 110 is denoted as a radial groove 1111a, a groove opening of the radial groove 1111a faces the first flat wire 210a, and a part of a surface of the first flat wire 210a in the radial direction R of the motor stator 100 can be directly cooled by coolant in the radial groove 1111a. The first cooling groove S1 is formed by an inner groove wall of the winding groove 110, and the winding groove 110 is formed on the motor stator 100. Therefore, this helps improve structural strength of the first cooling groove S1.

Still refer to FIG. 8. In an embodiment, the other radial groove wall 111b of the winding groove 110 includes one radial groove 1111, the one radial groove 1111 is concave in a direction that is away from the radial groove wall 111a and that is in the radial direction R of the motor stator 100, and the one radial groove 1111 on the other radial groove wall 111b is configured to enclose the third cooling groove S3 together with the second flat wire 210b.

In embodiments of this application, for ease of description, the one radial groove 1111 on the other radial groove wall 111b in the winding groove 110 is denoted as a radial groove 1111b, a groove opening of the radial groove 1111b faces the second flat wire 210b, and a part of a surface of the second flat wire 210b in the radial direction R of the motor stator 100 can be directly cooled by coolant in the radial groove 1111b. The third cooling groove S3 is formed by an inner groove wall of the winding groove 110, and the winding groove 110 is formed on the motor stator 100. Therefore, this helps improve structural strength of the third cooling groove S3.

Still refer to FIG. 8. In an embodiment, in the circumferential direction C of the motor stator 100, an inner groove width of the radial groove 1111a and an inner groove width of the radial groove 1111b are both less than the width of the first flat wire 210a. In this embodiment of this application, the inner groove width of the radial groove 1111a corresponds to the inner groove width of the first cooling groove S1, so that the radial groove 1111a can be used to fasten the first flat wire 210a, prevent the first flat wire 210a from falling into the radial groove 1111a, and ensure that the coolant in the first cooling groove S1 stably dissipates heat for the first flat wire 210a.

Still refer to FIG. 8. In an embodiment, in the circumferential direction C of the motor stator 100, an inner groove width of the radial groove 1111a and an inner groove width of the radial groove 1111b are both less than the width of the second flat wire 210b. In this embodiment of this application, the inner groove width of the radial groove 1111b corresponds to the inner groove width of the third cooling groove S3, so that the radial groove 1111b can be used to fasten the second flat wire 210b, prevent the second flat wire 210b from falling into the radial groove 1111b, and ensure that the coolant in the third cooling groove S3 stably dissipates heat for the second flat wire 210b.

Still refer to FIG. 8. In an embodiment, in the radial direction R of the motor stator 100, an inner groove depth of the radial groove 1111a and an inner groove depth of the radial groove 1111b are both less than the thickness of the first flat wire 210a. In this embodiment of this application, the inner groove depth of the radial groove 1111a and the inner groove depth of the radial groove 1111b respectively correspond to the inner groove depth of the first cooling groove S1 and the inner groove depth of the third cooling groove S3. The inner groove depth of the radial groove 1111a and the inner groove depth of the radial groove 1111b are smaller than the thickness of the first flat wire 210a. This helps properly allocate flow rates of coolant in different first cooling grooves S1 and different third cooling grooves S3, and ensures that the coolant can cool the flat wires 210 in each winding groove 110.

Still refer to FIG. 8. In an embodiment, in the radial direction R of the motor stator 100, an inner groove depth of the radial groove 1111a and an inner groove depth of the radial groove 1111b are both less than the thickness of the second flat wire 210b. This embodiment of this application helps properly allocate flow rates of coolant in different first cooling grooves S1 and different third cooling grooves S3, and ensures that the coolant can cool the flat wires 210 in each winding groove 110.

Still refer to FIG. 8. In an embodiment, in the radial direction R of the motor stator 100, a cross-sectional shape of the radial groove 1111a on the radial groove wall 111a is different from a cross-sectional shape of the radial groove 1111b on the other radial groove wall 111b, and an area of the cross-sectional shape of the radial groove 1111a on the radial groove wall 111a is greater than or equal to an area of the cross-sectional shape of the radial groove 1111b on the other radial groove wall 111b.

In this embodiment of this application, in the radial direction R of the motor stator 100, the cross-sectional shape of the radial groove 1111a is different from the cross-sectional shape of the radial groove 1111b, so that processing of the radial groove wall 111a and the other radial groove wall 111b of the winding groove 110 is more flexible. This helps meet different requirements generated by different positions of the radial groove 1111a and the radial groove 1111b in the winding groove 110. In the radial direction R of the motor stator 100, the radial groove 1111a is closer to the outer circumferential surface of the motor stator 100, and the radial groove 1111b is closer to the inner circumferential surface of the motor stator 100. The cross-sectional shape of the radial groove 1111b is processed into a triangle, to adapt to a feature that a diameter of the motor stator 100 gradually decreases from the outer circumferential surface to the inner circumferential surface, and the cross-sectional shape of the radial groove 1111a is a rectangle, a trapezoid, or a combination of two different geometric shapes.

In embodiments of this application, a value relationship between the area of the cross-sectional shape of the radial groove 1111a and the area of the cross-sectional shape of the radial groove 1111b corresponds to a value relationship between a volume of the first cooling groove S1 and a volume of the third cooling groove S3. This is equivalent to properly allocating flow rates of coolant in the first cooling groove S1 and the third cooling groove S3, thereby improving heat dissipation efficiency of the coolant.

In an embodiment, the cross-sectional shape and a cross-sectional area of the radial groove 1111a are the same as the cross-sectional shape and a cross-sectional area of the radial groove 1111b. This embodiment of this application helps improve structural symmetry of the winding groove 110.

Still refer to FIG. 8. In an embodiment, at least one circumferential groove wall 112 of the winding groove 110 includes one circumferential groove 1121, the one circumferential groove 1121 is concave in a direction that is away from the other circumferential groove wall 112 and that is in the circumferential direction C of the motor stator 100, and the one circumferential groove 1121 is configured to enclose the second cooling groove S2 together with at least one of other flat wires 210 in the winding groove 110.

In this embodiment of this application, a groove opening of the one circumferential groove 1121 faces at least one of the other flat wires 210, and a surface of at least one flat wire 210 in the circumferential direction C of the motor stator 100 can be directly cooled by coolant in the one circumferential groove 1121. The second cooling groove S2 is formed by an inner groove wall of the winding groove 110, and the winding groove 110 is formed on the motor stator 100. This helps improve structural strength of the second cooling groove S2.

Still refer to FIG. 8. In an embodiment, in the radial direction R of the motor stator 100, an inner groove width of the one circumferential groove 1121 is less than a sum of thicknesses of two flat wires 210. In this embodiment of this application, the inner groove width of the one circumferential groove 1121 in the radial direction R of the motor stator 100 corresponds to the inner groove width of the second cooling groove S2. This embodiment of this application prevents a flat wire 210 from being displaced into the one circumferential groove 1121 in the circumferential direction C of the motor stator 100 on the premise that the second cooling groove S2 can cool the at least one flat wire 210.

Still refer to FIG. 8. In an embodiment, in the circumferential direction C of the motor stator 100, an inner groove depth of the one circumferential groove 1121 is less than the width of the first flat wire 210a or the second flat wire 210b. This embodiment of this application helps implement proper distribution of coolant in the second cooling groove S2, and ensures that the coolant is concentrated in the first cooling groove S1 and the third cooling groove S3 in which radial surfaces of flat wires 210 can be cooled.

Still refer to FIG. 8. In an embodiment, in the circumferential direction C of the motor stator 100, an inner groove depth of the one circumferential groove 1121 is greater than or equal to 1/5 of a width of a flat wire 210 in the winding groove 110. In this embodiment of this application, the crack 102 between the circumferential groove wall 112 of the winding groove 110 and the plurality of flat wires 210 and the second cooling groove S2 are not of a same structure, and the second cooling groove S2 is formed by a part that is of the one circumferential groove wall 112 of the winding groove 110 and that is recessed away from the other circumferential groove wall 112. This embodiment of this application helps increase a flow rate of coolant in the second cooling groove S2, and improves heat dissipation efficiency of the coolant.

Still refer to FIG. 8. In an embodiment, the motor stator 100 includes at least two iron core punchings 113, the iron core punchings 113 are stacked in an axial direction O of the motor stator 100, each iron core punching 113 includes a plurality of through holes 1131, and each through hole 1131 penetrates through the iron core punching 113 in the axial direction O of the motor stator 100. Each through hole 1131 includes a first segment, a second segment, and a third segment that are sequentially adjacently distributed in the radial direction R of the motor stator 100. In the circumferential direction C of the motor stator 100, a hole diameter of the first segment and a hole diameter of the third segment are both less than a hole diameter of the second segment. The first segment and the third segment of the through hole 1131 of each iron core punching 113 are respectively aligned in the axial direction O of the motor stator 100 to form the radial groove 1111a and the radial groove 1111b of the winding groove 110, and a partial hole wall of the second segment of the through hole 1131 of each iron core punching 113 is aligned in the axial direction O of the motor stator 100 to form the one circumferential groove 1121 of the winding groove 110.

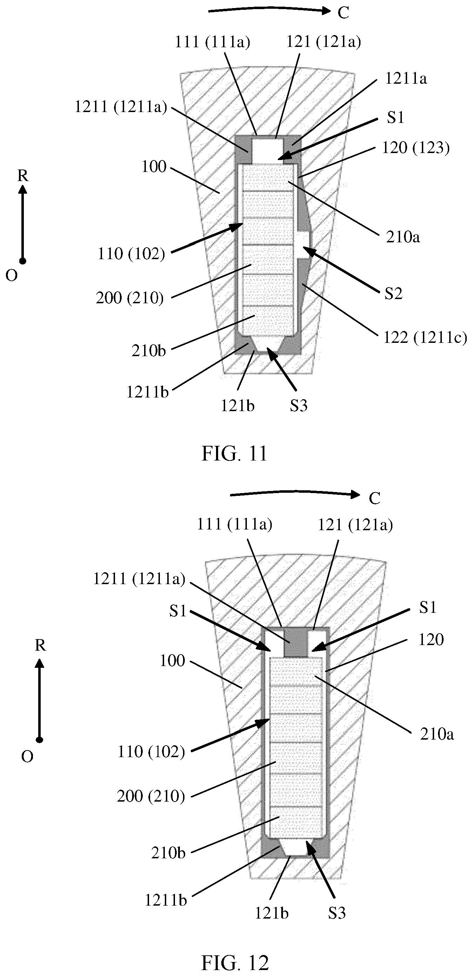

In the motor stators 100 shown in FIG. 11 to FIG. 13, structural features of the first cooling groove S1, the second cooling groove S2, and the third cooling groove S3 are jointly determined by the injection molded part and the plurality of flat wires 210 in the winding groove 110.

FIG. 11 is another partial sectional view of the motor stator 100 according to an embodiment of this application. In an embodiment, the motor stator 100 includes a plurality of injection molded parts 120, and each injection molded part 120 is configured to wrap the plurality of flat wires 210 accommodated in a groove wall of the winding groove 110.

In this embodiment of this application, the injection molded part 120 is an insulation layer-shaped structure processed and formed on an inner circumferential surface of the winding groove 110 by using an injection molding process. In the motor stator 100, the injection molded part 120 can implement insulation between the winding groove 110 and the plurality of flat wires 210. Specifically, the injection molded part 120 is configured to wrap the plurality of flat wires 210 in the winding groove 110, so that the plurality of flat wires 210 are spaced from the winding groove 110 through the injection molded part 120, and after an alternating current transmitted by a motor control unit is applied in the flat wire winding 200, due to blocking of the injection molded part 120, the current cannot flow from the flat wire winding 200 to the motor stator 100, thereby avoiding a short circuit and damage to the flat wire motor 11. In addition, the injection molded part 120 prevents the flat wire winding 200 from being eroded by environmental factors such as external moisture and impurities, thereby improving reliability and safety of the motor stator 100. A material of the injection molded part 120 is at least one of epoxy resin, phenolic resin, and polytetrafluoroethylene resin.

It should be noted that, that the injection molded part 120 is configured to wrap the plurality of flat wires 210 only indicates that there is a position relationship that is similar to wrapping and that is between the injection molded part 120 and the plurality of flat wires 210, and does not mean that the injection molded part 120 is in contact with all outer surfaces of the plurality of flat wires 210. In an embodiment, the injection molded part 120 is formed before the plurality of flat wires 210 are mounted in the winding groove 110, so that the injection molded part 120 does not fill space between the plurality of flat wires 210 and the winding groove 110. This facilitates maintenance and replacement of the plurality of flat wires 210. In addition, it may be understood that, in this embodiment of this application, a process of first processing the injection molded part 120 and then mounting the plurality of flat wires 210 and a gap between a part of an inner wall of the injection molded part 120 and the plurality of flat wires 210 provide prerequisites for forming a cooling groove between the injection molded part 120 and the plurality of flat wires 210.

Still refer to FIG. 11. One radial inner wall 121 of the injection molded part 120 includes one shoulder 1211, the one shoulder 1211 on the one radial inner wall 121 and the first flat wire 210a are arranged adjacently, and the one shoulder 1211 on the one radial inner wall 121 is configured to enclose the first cooling groove S1 together with the first flat wire 210a.

In embodiments of this application, for ease of description, the one radial inner wall 121 of the injection molded part 120 is denoted as a radial inner wall 121a, and the one shoulder 1211 on the one radial inner wall 121a is denoted as a shoulder 1211a.

In embodiments of this application, the radial inner wall 121a and the radial groove wall 111a of the winding groove 110 are arranged adjacently in the radial direction R of the motor stator 100. The shoulder 1211a protrudes from the radial groove wall 111a toward the first flat wire 210a, so that the shoulder 1211a can fasten the first flat wire 210a. A side surface of the shoulder 1211a in the circumferential direction C of the motor stator 100 can be used to enclose the first cooling groove S1 together with the first flat wire 210a. In other words, a gap between the radial groove wall 111a of the winding groove 110 and the first flat wire 210a is formed by using the shoulder 1211a.

In embodiments of this application, an inner groove wall of the winding groove 110 is spaced from the plurality of flat wires 210 through the injection molded part 120, to implement insulation between the motor stator 100 and the flat wire winding 200. This helps ensure electrical safety of the flat wire motor 11. In the injection molded part 120, the shoulder 1211a is used to fasten the radial surface of the first flat wire 210a. The first flat wire 210a cooperates with the shoulder 1211a, so that a surface of the first flat wire 210a is used to form the first cooling groove S1, and coolant can directly dissipate heat for the radial surface of the first flat wire 210a, thereby improving cooling efficiency, implementing temperature rise control on the flat wire winding 200, and avoiding damage to the flat wire motor 11 and causing a safety accident. The shoulder 1211a is used to fasten the first flat wire 210a and form the first cooling groove S1. This helps implement structure reuse, and reduces costs. In addition, the first cooling groove S1 is formed by the injection molded part 120 and the first flat wire 210a, so that processing of the winding groove 110 is omitted, and processing difficulty is reduced.

Still refer to FIG. 11. In an embodiment, the other radial inner wall 121 of the injection molded part 120 includes the other shoulder 1211, the other shoulder 1211 on the other radial inner wall 121 and the second flat wire 210b are arranged adjacently, and the other shoulder 1211 on the other radial inner wall 121 is configured to enclose the third cooling groove S3 together with the second flat wire 210b.

In embodiments of this application, for ease of description, the other radial inner wall 121 of the injection molded part 120 is denoted as the other radial inner wall 121b, and the other shoulder 1211 on the other radial inner wall 121b is denoted as a shoulder 1211b.

In embodiments of this application, the other radial inner wall 121b and the other radial groove wall 111b of the winding groove 110 are arranged adjacently in the radial direction R of the motor stator 100. The other shoulder 1211b protrudes from the other radial groove wall 111b toward the second flat wire 210b, so that the other shoulder 1211b can fasten the second flat wire 210b. A side surface of the other shoulder 1211b in the circumferential direction C of the motor stator 100 can be used to enclose the third cooling groove S3 together with the second flat wire 210b. In other words, a gap between the other radial groove wall 111b of the winding groove 110 and the second flat wire 210b is formed by using the shoulder 1211b.

Still refer to FIG. 11. In an embodiment, in the radial direction R of the motor stator 100, a spacing between the shoulder 1211a on the radial inner wall 121a and the other shoulder 1211b on the other radial inner wall 121b is less than a sum of thicknesses of the plurality of flat wires 210 in the winding groove 110.

In embodiments of this application, the plurality of flat wires 210 need to be clamped between the shoulder 1211a and the other shoulder 1211b, so that positions of the plurality of flat wires 210 relative to the winding groove 110 are not easily changed. If the injection molded part 120 is unable to keep the positions of the plurality of flat wires 210 relatively fixed, that is, the plurality of flat wires 210 are prone to displacement in a working process, currents in the plurality of flat wires 210 are unevenly distributed. Consequently, local current density is excessively small or excessively large, and the motor stator 100 generates noise, affecting NVH performance of the entire vehicle.

In an embodiment, in the radial direction R of the motor stator 100, a spacing between the shoulder 1211a and the other shoulder 1211b is equal to a sum of thicknesses of the plurality of flat wires 210 in the winding groove 110. This embodiment of this application helps reduce mounting difficulty of the plurality of flat wires 210.

Still refer to FIG. 11. In an embodiment, a radial length of a shoulder 1211 on each radial inner wall 121 is greater than or equal to the thickness of the first flat wire 210a. In this embodiment of this application, the radial length of the shoulder 1211 on each radial inner wall 121 corresponds to the inner groove depth of the first cooling groove S1 and the inner groove depth of the third cooling groove S3. This embodiment of this application helps improve flow rates of coolant in the first cooling groove S1 and the third cooling groove S3, and enhances heat dissipation effect of the coolant on the radial surface of the first flat wire 210a and the radial surface of the second flat wire 210b.

Still refer to FIG. 11. In an embodiment, a radial length of a shoulder 1211 on each radial inner wall 121 is greater than or equal to the thickness of the second flat wire 210b. This embodiment of this application helps improve flow rates of coolant in the first cooling groove S1 and the third cooling groove S3, and enhances heat dissipation effect of the coolant on the first flat wire 210a and the second flat wire 210b.

Still refer to FIG. 11. In an embodiment, a radial length of a shoulder 1211 on each radial inner wall 121 is greater than or equal to the thickness of the first flat wire 210a, and the radial length of the shoulder 1211 on each radial inner wall 121 is greater than or equal to the thickness of the second flat wire 210b. This embodiment of this application helps improve flow rates of coolant in the first cooling groove S1 and the third cooling groove S3, and enhances heat dissipation effect of the coolant on the first flat wire 210a and the second flat wire 210b.

Still refer to FIG. 11. In an embodiment, a circumferential width of a shoulder 1211 on each radial inner wall 121 is less than the width of the first flat wire 210a. This embodiment of this application can ensure that there is a gap between the first flat wire 210a and a part of the radial inner wall 121a other than the shoulder 1211a, and ensure that there is a gap between the second flat wire 210b and a part of the other radial inner wall 121b other than the other shoulder 1211b, so that the first flat wire 210a and the second flat wire 210b can be respectively configured to enclose the first cooling groove S1 and the third cooling groove S3, to avoid a case in which coolant cannot directly cool the first flat wire 210a and the second flat wire 210b. In addition, because both the shoulder 1211a and the other shoulder 1211b are parts of the injection molded part 120, this embodiment of this application further helps reduce processing costs of the injection molded part 120.

Still refer to FIG. 11. In an embodiment, a circumferential width of a shoulder 1211 on each radial inner wall 121 is less than the width of the second flat wire 210b. This embodiment of this application helps avoid a case in which coolant cannot directly cool the first flat wire 210a and the second flat wire 210b, and further helps reduce processing costs of the injection molded part 120.

Still refer to FIG. 11. In an embodiment, a circumferential width of a shoulder 1211 on each radial inner wall 121 is less than the width of the first flat wire 210a, and the circumferential width of the shoulder 1211 on each radial inner wall 121 is less than the width of the second flat wire 210b. This embodiment of this application helps avoid a case in which coolant cannot directly cool the first flat wire 210a and the second flat wire 210b, and further helps reduce processing costs of the injection molded part 120.

Still refer to FIG. 11. In an embodiment, a cross section of the shoulder 1211a on the radial inner wall 121a and a cross section of the other shoulder 1211b on the other radial inner wall 121b have different shapes and areas.

In this embodiment of this application, the cross section of the shoulder 1211a and the cross section of the other shoulder 1211b have different shapes and areas in the radial direction R of the motor stator 100, so that processing of the radial inner wall 121a and the other radial inner wall 121b of the injection molded part 120 is more flexible. This helps meet different requirements generated by different positions of the shoulder 1211a and the other shoulder 1211b in the winding groove 110. In an embodiment, in the radial direction R of the motor stator 100, the area of the cross section of the shoulder 1211a is greater than the area of the cross section of the other shoulder 1211b. In embodiments of this application, the shoulder 1211a is closer to the outer circumferential surface of the motor stator 100 than the other shoulder 1211b, and a diameter of the motor stator 100 gradually decreases from the outer circumferential surface to the inner circumferential surface. Therefore, the area of the cross section of the shoulder 1211a being greater than the area of the cross section of the other shoulder 1211b does not cause a volume of the first cooling groove S1 to be less than a volume of the third cooling groove S3.

It may be understood that, in embodiments of this application, a quantity of shoulders 1211 is associated with a quantity of first cooling grooves S1 or third cooling grooves S3. The following uses the shoulder 1211a and the first cooling groove S1 in the winding groove 110 as an example for description. Refer to FIG. 11 and FIG. 12. FIG. 12 is another partial sectional view of the motor stator 100 according to an embodiment of this application. In an embodiment, in each winding groove 110, a quantity of shoulders 1211a is different from a quantity of first cooling grooves S1, and in the circumferential direction C of the motor stator 100, a length of the shoulder 1211a or the first cooling groove S1, whichever is smaller in quantity, is greater than a length of the other.

Effects of the shoulder 1211a and the first cooling groove S1 are affected by respective circumferential lengths. If a circumferential length of the shoulder 1211a is excessively small, a contact area between the shoulder 1211a and the first flat wire 210a is small, causing negative impact on connection strength between the shoulder 1211a and the first flat wire 210a. If a circumferential length of the first cooling groove S1 is excessively small, a flow rate of coolant in the first cooling groove S1 is small, and an area of the first flat wire 210a that can be cooled by the coolant is also small. Consequently, the coolant has poor heat dissipation effect on the first flat wire 210a. Because a total circumferential length of an end of the injection molded part 120 is fixed, circumferential lengths occupied by the shoulder 1211a and the first cooling groove S1 need to be properly allocated.

In embodiments of this application, in the circumferential direction C of the motor stator 100, a length of the shoulder 1211a or the first cooling groove S1, whichever is smaller in quantity, is greater than a length of the other. In other words, a quantity is used to compensate for a problem caused by an insufficient circumferential length. As shown in FIG. 11 and FIG. 12, if the circumferential length of the shoulder 1211a is less than the circumferential length of the first cooling groove S1, because there are a larger quantity of shoulders 1211a, it can be ensured that there is a sufficiently large contact area between the shoulder 1211a and the first flat wire 210a, thereby ensuring stability of a fastening connection between the shoulder 1211a and the first flat wire 210a. As shown in FIG. 8, if the circumferential length of the first cooling groove S1 is less than the circumferential length of the shoulder 1211a, because there are a larger quantity of first cooling grooves S1, neither a flow rate of coolant in the first cooling groove S1 nor an area of the first flat wire 210a that can be in contact with the coolant in the first cooling groove S1 is negatively affected.

FIG. 11 and FIG. 12 schematically show a value relationship between quantities and circumferential lengths of shoulders 1211a and first cooling grooves S1 in the winding groove 110. As shown in FIG. 11, the radial inner wall 121a of the injection molded part 120 in the radial direction R of the motor stator 100 includes two shoulders 1211a, the two shoulders 1211a and the first flat wire 210a form the first cooling groove S1, and in the circumferential direction C of the motor stator 100, a length of the first cooling groove S1 is greater than a sum of lengths of the two shoulders 1211a. As shown in FIG. 12, in an embodiment, the radial inner wall 121a of the injection molded part 120 in the radial direction R of the motor stator 100 includes one shoulder 1211a, the shoulder 1211a is configured to form two first cooling grooves S1 together with the first flat wire 210a, and in the circumferential direction C of the motor stator 100, a length of the shoulder 1211a is greater than a sum of lengths of the two first cooling grooves S1.

In an embodiment, in each winding groove 110, a quantity of shoulders 1211a is the same as a quantity of first cooling grooves S1, and in the circumferential direction C of the motor stator 100, a length of the shoulder 1211a is equal to a length of the first cooling groove S1. In this embodiment of this application, functions of the shoulder 1211a and the first cooling groove S1 are considered.

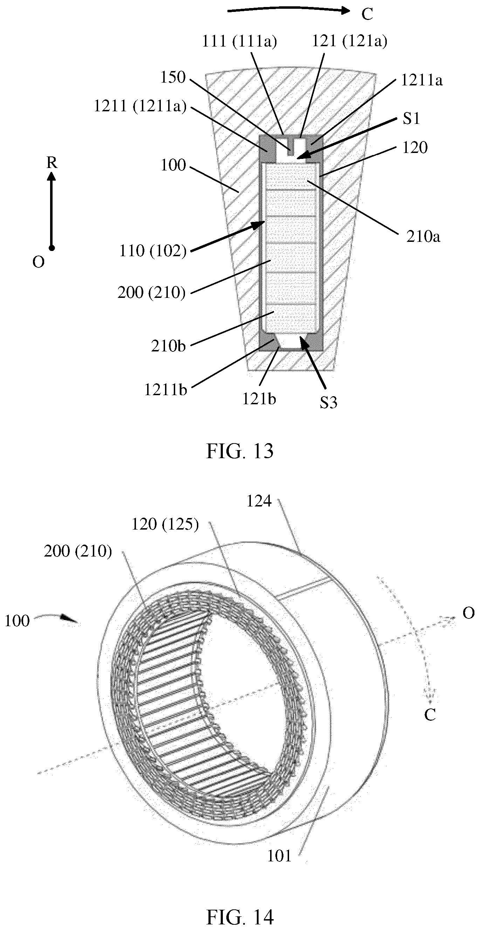

FIG. 13 is another partial sectional view of the motor stator 100 according to an embodiment of this application. In an embodiment, the protrusion 150 and the injection molded part 120 are integrally formed, and the protrusion 150 is configured to separate the first cooling groove S1 enclosed by the shoulder 1211a and the first flat wire 210a.

Still refer to FIG. 11. In an embodiment, each circumferential inner wall 122 of the injection molded part 120 includes two shoulders 1211, the two shoulders 1211 on each circumferential inner wall 122 are spaced apart in the radial direction R of the motor stator 100, radial lengths of the two shoulders 1211 on each circumferential inner wall 122 each are greater than a sum of thicknesses of two flat wires 210, and a radial spacing between the two shoulders 1211 on each circumferential inner wall 122 is less than the sum of the thicknesses of the two flat wires 210.

In embodiments of this application, for ease of description, the two shoulders 1211 on each circumferential inner wall 122 are denoted as two shoulders 1211c. The two shoulders 1211c protrude away from the one circumferential groove wall 112 in the circumferential direction C of the motor stator 100. In other words, a gap between the one circumferential groove wall 112 of the winding groove 110 and at least one of the other flat wires 210 is formed by using the two shoulders 1211c. In the radial direction R of the motor stator 100, a spacing between the two shoulders 1211c is less than the sum of the thicknesses of the two flat wires 210, and radial space between the two shoulders 1211c is used to form the second cooling groove S2 with at least one flat wire 210. Lengths of the two shoulders 1211c in the radial direction R of the motor stator 100 each are greater than the sum of the thicknesses of the two flat wires 210, so that each shoulder 1211c can fasten at least two of the plurality of flat wires 210.

It may be understood that, in embodiments of this application, each circumferential inner wall 122 of the injection molded part 120 includes three or more shoulders 1211c, and each circumferential inner wall 122 and the plurality of flat wires 210 can form the second cooling groove S2.

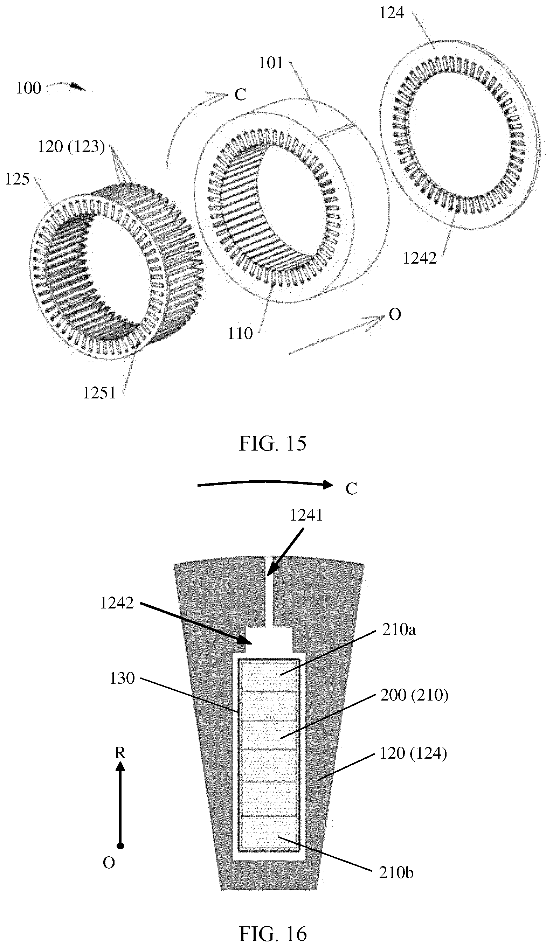

Refer to FIG. 14 to FIG. 16. FIG. 14 is a diagram of another structure of the motor stator 100 according to an embodiment of this application. FIG. 15 is an exploded view of the motor stator 100 according to an embodiment of this application. FIG. 16 is a partial sectional view of the injection molded part 120 according to an embodiment of this application.

In an embodiment, as shown in FIG. 14 and FIG. 15, in the axial direction O of the motor stator 100, each injection molded part 120 is exposed relative to an end face of the stator iron core 101 in the motor stator 100. As shown in FIG. 16, each injection molded part 120 includes a liquid inlet 1241, the liquid inlet 1241 is configured to transmit coolant to the first cooling groove S1, and the liquid inlet 1241 is oriented in a direction that is away from a circle center of the motor stator 100 and that is in the radial direction R of the motor stator 100.

In embodiments of this application, as shown in FIG. 11, a part of the injection molded part 120 is injection molded in the winding groove 110. For ease of description, this part of the injection molded part 120 is denoted as a first injection molded section 123. As shown in FIG. 14 to FIG. 16, the other part of the injection molded part 120 is exposed relative to the winding groove 110. For ease of description, this part of the injection molded part 120 is denoted as a second injection molded section 124. The liquid inlet 1241 of the injection molded part 120 is located in the second injection molded section 124, and the liquid inlet 1241 is configured to guide the coolant to the first cooling groove S1 in the first injection molded section 123, to direct cool the first flat wire 210a. The liquid inlet 1241 does not need to occupy space of the motor stator 100, thereby avoiding negative impact on structural strength and magnetic permeability caused by directly drilling a hole on the motor stator 100.

Still refer to FIG. 16. In an embodiment, in the radial direction R of the motor stator 100, a distance between the liquid inlet 1241 and the first flat wire 210a in the winding groove 110 is less than a distance between the liquid inlet 1241 and the second flat wire 210b in the winding groove 110.

In embodiments of this application, the first flat wire 210a and the second flat wire 210b are respectively configured to form the first cooling groove S1 and the second cooling groove S2. Therefore, the first flat wire 210a being closer to the liquid inlet 1241 than the second flat wire 210b helps shorten a movement path of the coolant between the liquid inlet 1241 and the first cooling groove S1, reduces a loss of the coolant on a transmission path, and improves cooling efficiency.

Still refer to FIG. 15. In an embodiment, in the radial direction R of the motor stator 100, a length of the second injection molded section 124 is greater than a length of the first injection molded section 123, the motor stator 100 includes a plurality of injection molded parts 120, and second injection molded sections 124 of the plurality of injection molded parts 120 are connected to each other.

In this embodiment of this application, in the injection molded part 120, the first injection molded section 123 and the second injection molded section 124 are integrally injection molded, and the second injection molded section 124 is connected to an end face of the stator iron core 101 in the axial direction of the motor stator 100. The plurality of winding grooves 110 of the motor stator 100 are spaced from each other, a plurality of first injection molded sections 123 in each winding groove 110 are also independent of each other, a radial length of the second injection molded section 124 is greater than a radial length of the first injection molded section 123, and the second injection molded sections 124 of the plurality of injection molded parts 120 are connected to each other, so that first injection molded sections 123 located in different winding grooves 110 are also connected as a whole. This helps improve structural strength of the plurality of injection molded parts 120. In addition, an end part of the flat wire winding 200 is exposed relative to the winding groove 110, and the second injection molded section 124 of the injection molded part 120 further helps insulate the end part of the flat wire winding 200.

Still refer to FIG. 15 and FIG. 16. In an embodiment, the second injection molded section 124 of the injection molded part 120 further includes an end groove 1242, each end groove 1242 is configured to accommodate the plurality of flat wires 210 exposed relative to each winding groove 110, each end groove 1242 penetrates through each second injection molded section 124 in the axial direction O of the motor stator 100, and the end groove 1242 is configured to communicate with the first cooling groove S1 and the liquid inlet 1241 in the winding groove 110. As shown in FIG. 4, the end groove 1242 and the winding groove 110 are adjacently arranged in the axial direction O of the motor stator, and in the circumferential direction C of the motor stator 100, an inner groove width of the end groove 1242 is greater than the inner groove width of the first cooling groove S1 in the winding groove 110.

In this embodiment of this application, the second injection molded section 124 includes the end groove 1242 that penetrates the second injection molded section 124 in the axial direction O of the motor stator 100, and the end groove 1242 can accommodate end parts of the plurality of flat wires 210. In the radial direction R of the motor stator 100, at least a part of the liquid inlet 1241 is aligned with the end groove 1242. In the axial direction O of the motor stator 100, at least a part of the first cooling groove S1 is aligned with the end groove 1242, and the inner groove width of the end groove 1242 is greater than the inner groove width of the first cooling groove S1, so that the end groove 1242 can connect the liquid inlet 1241 to the first cooling groove S1. In an embodiment, in the circumferential direction C of the motor stator 100, an inner groove width of the end groove 1242 is equal to the inner groove width of the first cooling groove S1. This embodiment of this application helps improve an alignment degree between the end groove 1242 and the first cooling groove S1.

Still refer to FIG. 11 and FIG. 16. In an embodiment, the end groove 1242 is further configured to communicate with the second cooling groove S2 in the winding groove 110, and in the circumferential direction C of the motor stator 100, an inner groove width of the end groove 1242 is greater than a maximum spacing between two circumferential inner walls 122 of the injection molded part 120 in the winding groove 110.

In this embodiment of this application, same as the first cooling groove S1, coolant in the second cooling groove S2 also comes from the end groove 1242, at least a part of the second cooling groove S2 is aligned with the end groove 1242 in the axial direction O of the motor stator 100, and the inner groove width of the end groove 1242 is greater than the maximum spacing between the two circumferential inner walls 122 of the injection molded part 120. In this way, the second cooling groove S2 communicates with the end groove 1242. In an embodiment, in the circumferential direction C of the motor stator 100, an inner groove width of the end groove 1242 is equal to a maximum spacing between two circumferential inner walls 122 of the injection molded part 120. This embodiment of this application helps improve an alignment degree between the end groove 1242 and the second cooling groove S2.

In this embodiment of this application, the first injection molded section 123 in the injection molded part 120 is used to fasten the plurality of flat wires 210, so that in the radial direction R of the motor stator 100, an inner circumferential surface of the end groove 1242 of the second injection molded section 124 is spaced from outer circumferential surfaces of the plurality of flat wires 210. This provides a prerequisite for the end groove 1242 to communicate with the first cooling groove S1 and the second cooling groove S2.

In this embodiment of this application, in each winding groove 110, a connection status between the first cooling groove S1 and the second cooling groove S2 depends on a position of the shoulder 1211a. Specifically, as shown in FIG. 11 and FIG. 13, when the shoulder 1211a is connected to the two circumferential inner walls 122 of the injection molded part 120, the first cooling groove S1 and the second cooling groove S2 are not connected. However, due to existence of the end groove 1242, coolant can be introduced into both the first cooling groove S1 and the second cooling groove S2, so that the coolant cools a plurality of end faces of the plurality of flat wires 210. As shown in FIG. 12, when the shoulder 1211a is spaced from the two circumferential inner walls 122 of the injection molded part 120, there is no blocking of the shoulder 1211a between the first cooling groove S1 and the second cooling groove S2, and the first cooling groove S1 communicates with the second cooling groove S2. In addition to separately flowing from the end groove 1242 to the first cooling groove S1 and the second cooling groove S2, coolant can further flow from the first cooling groove S1 to the second cooling groove S2. If the coolant does not have sufficient power to flow in the liquid inlet 1241 and the end groove 1242, connecting the first cooling groove S1 to the second cooling groove S2 can compensate for a flow rate of the coolant in the second cooling groove S2.

Still refer to FIG. 11 and FIG. 16. In an embodiment, the end groove 1242 is further configured to communicate with the third cooling groove S3 in the winding groove 110. In the circumferential direction C of the motor stator 100, an inner groove width of the end groove 1242 is greater than the inner groove width of the third cooling groove S3 in the winding groove 110.

In this embodiment of this application, the first cooling groove S1 and the third cooling groove S3 are respectively formed at two ends of the plurality of flat wires 210 in the radial direction R of the motor stator 100, the end groove 1242 is configured to guide coolant from the liquid inlet 1241 to the third cooling groove S3, and a combination of the first cooling groove S1 to the third cooling groove S3 surrounds outer circumferential sides of the plurality of flat wires 210, so that the coolant can exchange heat with different outer surfaces of the plurality of flat wires 210 in different directions. When the second cooling groove S2 communicates with the third cooling groove S3, because the third cooling groove S3 can be configured to collect coolant flowing down from the second cooling groove S2, the end groove 1242 does not transmit coolant to the third cooling groove S3, thereby helping reduce costs. In an embodiment, the powertrain 10 further includes an oil pump, and the oil pump is configured to transmit coolant to each first cooling groove, each second cooling groove, and each third cooling groove through each liquid inlet and each end groove.

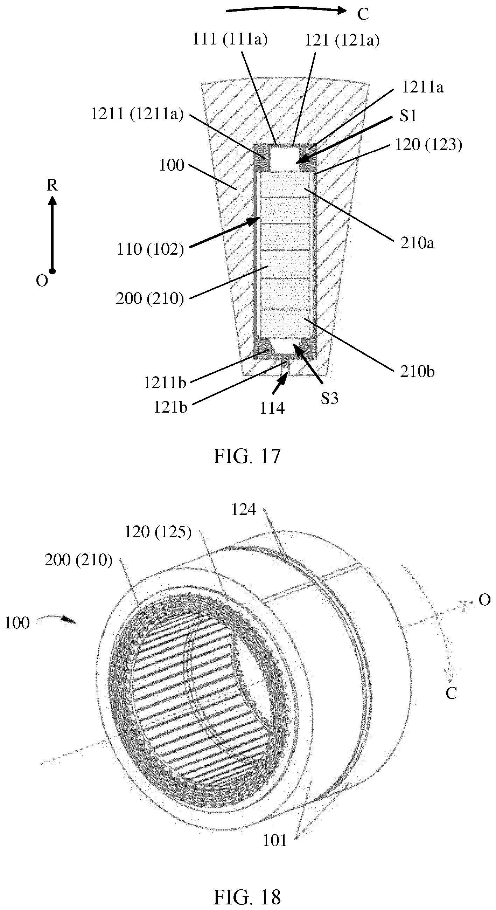

FIG. 17 is another partial sectional view of the motor stator 100 according to an embodiment of this application. In an embodiment, each winding groove 110 includes a radial groove opening 114, an opening direction of the radial groove opening 114 is away from the plurality of flat wires 210 in the radial direction R of the motor stator 100, the radial groove opening 114 is configured to communicate with the inner circumferential surface of the motor stator 100, and in each winding groove 110, the other radial inner wall 121b of the injection molded part 120 in the radial direction R of the motor stator 100 is configured to block the radial groove opening 114, the other radial inner wall 121b is located in the radial groove opening 114, and in the circumferential direction C of the motor stator 100, a maximum length of the other radial inner wall 121b is greater than an inner diameter of the radial groove opening 114.

In this embodiment of this application, the radial groove opening 114 of the winding groove 110 is located at one end that is of the winding groove 110 and that is close to the inner circumferential surface of the motor stator 100, to improve NVH performance of the motor stator 100. Because the radial groove opening 114 in the radial direction R of the motor stator 100 is close to the third cooling groove S3, blocking the radial groove opening 114 can prevent coolant from leaking at the radial groove opening 114. In this embodiment of this application, the other radial inner wall 121b of the injection molded part 120 in the radial direction R of the motor stator 100 is configured to enclose the third cooling groove S3 together with the second flat wire 210b, and is further configured to seal the radial groove opening 114 of the winding groove 110. Specifically, the radial groove opening 114 is configured to accommodate the other radial inner wall 121b of the injection molded part 120, and a maximum circumferential length of the other radial inner wall 121b of the injection molded part 120 is greater than an inner diameter of the radial groove opening 114. This can effectively avoid coolant leakage.

Still refer to FIG. 15. In an embodiment, the injection molded part 120 further includes a third injection molded section 125, and the third injection molded section 125 is exposed relative to the winding groove 110. The second injection molded section 124 and the third injection molded section 125 are respectively connected to two end faces that are of the motor stator 100 and that are in the axial direction O of the motor stator 100. The third injection molded section 125 and the second injection molded section 124 are both configured to connect the first injection molded section 123 that is injection molded into each winding groove 110. This embodiment of this application helps insulate two ends of the flat wire winding 200, and ensures electrical safety of the motor stator 100. In an embodiment, lengths of the second injection molded section 124 and the third injection molded section 125 in the circumferential direction C of the motor stator 100 are both 4 mm.

Still refer to FIG. 15. In an embodiment, the third injection molded section 125 includes a fastening groove 1251, and the fastening groove 1251 is configured to fasten the flat wire winding 200 exposed relative to the winding groove 110. The fastening groove 1251 penetrates the third injection molded section 125 in the axial direction O of the motor stator 100. A minimum spacing between two ends of the fastening groove 1251 in the radial direction R of the motor stator 100 is less than or equal to a length of the flat wire winding 200.

In this embodiment of this application, different from the second injection molded section 124, because the fastening groove 1251 of the third injection molded section 125 does not need to transmit coolant to the winding groove 110, the fastening groove 1251 cooperates with the shoulder in the first injection molded section 123 to jointly fasten the flat wire winding 200.

FIG. 18 is a diagram of another structure of the motor stator 100 according to an embodiment of this application. In an embodiment, the motor stator 100 includes two stator iron cores 101. In each stator iron core 101, the first injection molded section 123 of each injection molded part 120 is integrally injection molded on an inner surface of each winding groove 110. The second injection molded section 124 and the third injection molded section 125 of each injection molded part 120 are exposed relative to each winding groove 110. In the axial direction O of the motor stator 100, second injection molded sections 124 respectively connected to the two stator iron cores 101 are connected, and end grooves 1242 of injection molded parts 120 of the two stator iron cores 101 are aligned and connected.

In this embodiment of this application, the two stator iron cores 101 of the motor stator 100 are connected through the second injection molded sections 124 of the injection molded parts 120. The second injection molded sections 124 respectively connected to the two stator iron cores 101 are fastened to each other through insulation adhesive. The second injection molded sections 124 of the two stator iron cores 101 each include an end groove 1242, and the end groove 1242 is configured to accommodate a part of the flat wire winding 200, so that the flat wire winding 200 located between the two motor stators 100 is not exposed. This helps enhance insulation performance of the flat wire winding 200.

Still refer to FIG. 16. In an embodiment, the motor stator 100 further includes insulation paper 130, and the insulation paper 130 is configured to cover some outer surfaces of the plurality of flat wires 210. The insulation paper 130 is located in the end grooves 1242 of the second injection molded sections 124 of the two stator iron cores 101. In the axial direction O of the motor stator 100, a length of the insulation paper 130 is greater than a sum of lengths of the second injection molded sections 124 of the two stator iron core 101. In this embodiment of this application, the plurality of flat wires 210 located in the end grooves 1242 are insulated through both the injection molded parts 120 and the insulation paper 130. This helps further improve electrical safety performance of the motor stator 100. The axial length of the insulation paper 130 being greater than the sum of axial lengths of the two second injection molded sections 124 ensures that the flat wire winding 200 located between the two motor stators 100 can be completely covered by the insulation paper 130 in the axial direction O of the motor stator 100. In an embodiment, the length of the insulation paper 130 in the axial direction O of the motor stator is 10 mm.

The following describes two processing methods for the motor stator 100 having the two stator iron cores 101 in embodiments of this application.

In an embodiment, a processing method for the motor stator 100 includes the following steps. First, an injection molded part 120 is prepared for each of the two stator iron cores 101 by using an injection molding process, a first injection molded section 123 of the injection molded part 120 of each stator iron core 101 is integrally injection molded in a winding groove 110 of each stator iron core 101, and a second injection molded section 124 of each injection molded part 120 is exposed outside each winding groove 110. Then, the insulation paper 130 is placed in an end groove 1242 of the injection molded part 120 of one of the stator iron cores 101. Then, second injection molded sections 124 of injection molded parts 120 of the two stator iron cores 101 are connected in the axial direction O of the motor stator 100, and the insulation paper 130 is located in the second injection molded sections 124 of the two stator iron cores 101. Finally, the flat wire winding 200 is mounted in the injection molded parts 120 of the two stator iron core 101, and the insulation paper 130 covers a part of an outer surface of the flat wire winding 200.

In an embodiment, the other processing method for the motor stator 100 includes the following steps. First, an injection molded part 120 is prepared for each of the two stator iron cores 101 by using an injection molding process, a first injection molded section 123 of the injection molded part 120 of each stator iron core 101 is integrally injection molded in a winding groove 110 of each stator iron core 101, and a second injection molded section 124 of each injection molded part 120 is exposed outside each winding groove 110. Then, a part of the flat wire winding 200 is mounted in the injection molded part 120 of one of the stator iron cores 101. Then, the insulation paper 130 is placed in an end groove 1242 of the second injection molded section 124 of one of the stator iron cores 101, and the insulation paper 130 covers a part of an outer surface of the flat wire winding 200. Finally, the second injection molded sections 124 of the injection molded parts 120 of the two stator iron cores 101 are connected in the axial direction O of the motor stator 100, and the insulation paper 130 is located in the second injection molded sections 124 of the two stator iron cores 101.

In embodiments of this application, a difference between the foregoing two methods mainly lies in different sequences of mounting the insulation paper 130 and the flat wire winding 200. In the first processing method, the insulation paper 130 is mounted first, and the flat wire winding 200 is mounted later. Therefore, an assembly process of the first processing method is simple. In the second processing method, the flat wire winding 200 is mounted first, and the insulation paper 130 is mounted later. The flat wire winding 200 can support mounting of the insulation paper 130, and in an assembly process, it is convenient to adjust a mounting operation in time by observing whether the insulation paper 130 is squeezed and misplaced by the flat wire winding 200, so that the insulation paper 130 is not easily damaged.

The foregoing describes in detail the flat wire motor with the directly cooled flat wire winding, the powertrain, and the electric vehicle provided in embodiments of this application. Specific examples are used in this specification to describe a principle and embodiments of this application, and the foregoing embodiments are merely used to help understand the method and core ideas of this application. In addition, a person of ordinary skill in the art may make modifications to the specific embodiments and the application scope based on the idea of this application. In conclusion, the content of this specification shall not be construed as a limitation on this application.

## Claims

1. A flat wire motor with a directly cooled flat wire winding, wherein a motor stator of the flat wire motor comprises a plurality of winding grooves, the plurality of winding grooves are spaced apart in a circumferential direction of the motor stator, each winding groove is configured to accommodate a plurality of flat wires, the plurality of flat wires in the winding groove comprise a first flat wire and a second flat wire, and the first flat wire and the second flat wire in the winding groove are respectively arranged on two sides of other flat wires in the plurality of flat wires in a radial direction of the motor stator;
one radial groove wall of the winding groove and the first flat wire are arranged adjacently in the radial direction of the motor stator, and a gap between the one radial groove wall of the winding groove and the first flat wire is used as a first cooling groove; and
the first cooling groove is configured to transmit coolant to directly cool the first flat wire, and in the circumferential direction of the motor stator, an inner groove width of the first cooling groove is less than a width of the first flat wire.

2. The flat wire motor according to claim 1, wherein the plurality of flat wires in the winding groove are arranged in the radial direction of the motor stator, and the first cooling groove is configured to transmit the coolant to directly cool the plurality of flat wires; and
in the circumferential direction of the motor stator, the inner groove width of the first cooling groove is less than a width of each flat wire in the winding groove, and an inner groove width of the winding groove is greater than or equal to the width of each flat wire in the winding groove.

3. The flat wire motor according to claim 1 or 2, wherein in the radial direction of the motor stator, a distance between the first cooling groove and an outer circumferential surface of the motor stator is less than a distance between each flat wire in the winding groove and the outer circumferential surface of the motor stator, and an inner groove depth of the first cooling groove is less than or equal to a thickness of the first flat wire.

4. The flat wire motor according to any one of claims 1 to 3, wherein the motor stator comprises at least one radial flow path, and the radial flow path is configured to connect the first cooling groove to the outer circumferential surface of the motor stator in the radial direction of the motor stator.

5. The flat wire motor according to any one of claims 1 to 4, wherein first cooling grooves in the plurality of winding grooves are spaced apart in the circumferential direction of the motor stator, at least one of the first cooling grooves comprises a protrusion, the protrusion is configured to separate the first cooling groove, and in the radial direction of the motor stator, a length of the protrusion is less than or equal to a length of the first cooling groove.

6. The flat wire motor according to claim 5, wherein in the circumferential direction of the motor stator, a width of the protrusion is less than half the width of the first flat wire.

7. The flat wire motor according to any one of claims 1 to 6, wherein one circumferential groove wall of the winding groove and the plurality of flat wires in the winding groove are arranged adjacently in the circumferential direction of the motor stator, a gap between the one circumferential groove wall of the winding groove and at least one of the other flat wires is used as a second cooling groove, and the second cooling groove is configured to transmit the coolant to directly cool the at least one flat wire;
an inner groove depth of the second cooling groove in the circumferential direction of the motor stator is less than the inner groove depth of the first cooling groove in the radial direction of the motor stator; and
in the radial direction of the motor stator, an inner groove width of the second cooling groove is less than a sum of thicknesses of the at least one flat wire.

8. The flat wire motor according to any one of claims 1 to 7, wherein the other radial groove wall of the winding groove and the second flat wire are arranged adjacently and spaced apart in the radial direction of the motor stator, a gap between the other radial groove wall of the winding groove and the second flat wire is used as a third cooling groove, and the third cooling groove is configured to transmit the coolant to directly cool the second flat wire;
in the circumferential direction of the motor stator, an inner groove width of the third cooling groove is less than a width of the second flat wire; and
in the radial direction of the motor stator, an inner groove depth of the third cooling groove is less than the inner groove depth of the first cooling groove or greater than a thickness of the second flat wire.

9. The flat wire motor according to any one of claims 1 to 8, wherein at least one of the one radial groove wall or the other radial groove wall of the winding groove comprises one radial groove, and the one radial groove is concave in a direction that is away from the other radial groove wall and that is in the radial direction of the motor stator;
in the circumferential direction of the motor stator, an inner groove width of the one radial groove is less than the width of the first flat wire or the second flat wire; and
in the radial direction of the motor stator, an inner groove depth of the one radial groove is less than the thickness of the first flat wire or the second flat wire.

10. The flat wire motor according to claim 9, wherein in the radial direction of the motor stator, a cross-sectional shape of the one radial groove on the one radial groove wall is different from a cross-sectional shape of the one radial groove on the other radial groove wall, and an area of the cross-sectional shape of the one radial groove on the one radial groove wall is greater than or equal to an area of the cross-sectional shape of the one radial groove on the other radial groove wall.

11. The flat wire motor according to claim 9 or 10, wherein at least one circumferential groove wall of the winding groove comprises one circumferential groove, and the one circumferential groove is concave in a direction that is away from the other circumferential groove wall and that is in the circumferential direction of the motor stator;
in the radial direction of the motor stator, an inner groove width of the one circumferential groove is less than a sum of thicknesses of two flat wires; and
in the circumferential direction of the motor stator, an inner groove depth of the one circumferential groove is less than the width of the first flat wire or the second flat wire.

12. The flat wire motor according to any one of claims 1 to 11, wherein the motor stator further comprises a plurality of injection molded parts, each injection molded part is configured to wrap the plurality of flat wires accommodated in a groove wall of the winding groove, each injection molded part is exposed relative to an end face of a stator iron core in the motor stator in an axial direction of the motor stator, each injection molded part comprises a liquid inlet, the liquid inlet is configured to transmit the coolant to the first cooling groove, and the liquid inlet is oriented in a direction that is away from a center of the motor stator and that is in the radial direction of the motor stator.

13. The flat wire motor according to claim 12, wherein at least one of a radial inner wall or a circumferential inner wall of at least one injection molded part comprises one or more shoulders;
the at least one radial inner wall comprises at least one shoulder, the shoulder on each radial inner wall and the first flat wire or the second flat wire are arranged adjacently in the radial direction of the motor stator, a radial length of the shoulder on each radial inner wall is greater than or equal to a thickness of at least one of the first flat wire or the second flat wire, a circumferential width of the shoulder on each radial inner wall is less than a width of at least one of the first flat wire or the second flat wire, one shoulder on one radial inner wall and the first flat wire are arranged adjacently, the other shoulder on the other radial inner wall and the second flat wire are arranged adjacently, and a cross section of the one shoulder on the one radial inner wall and a cross section of the other shoulder on the other radial inner wall have different shapes and areas; and
each circumferential inner wall comprises two shoulders, the two shoulders on each circumferential inner wall are spaced apart in the radial direction of the motor stator, radial lengths of the two shoulders on each circumferential inner wall each are greater than the sum of the thicknesses of the two flat wires, and a radial spacing between the two shoulders on each circumferential inner wall is less than the sum of the thicknesses of the two flat wires.

14. A powertrain, wherein the powertrain comprises a motor control unit, a reducer, an oil pump, and the flat wire motor according to any one of claims 1 to 13, the motor control unit is configured to provide an alternating current for a flat wire winding of the flat wire motor, the flat wire motor is configured to be in transmission connection with the reducer, and the oil pump is configured to transmit coolant to directly cool the flat wire winding of the flat wire motor.

15. An electric vehicle, wherein the electric vehicle comprises a vehicle frame, a battery pack, and the powertrain according to claim 14, the vehicle frame is configured to fasten the battery pack and the powertrain, the battery pack is configured to supply power to the flat wire motor through the motor control unit, and the flat wire motor is configured to drive wheels of the electric vehicle through the reducer.
